# EUROPEAN PATENT APPLICATION

(11) **EP 4 811 486 A1**
(43) Date of publication of application: **23.09.2026**
(21) Application number: 24904068.4
(22) Date of filing: 26.11.2024
(51) Int. Cl.: H01M 10/0585, H01M 10/0562, H01M 10/04, H01M 10/42, G01B 21/08

(54) **ALL-SOLID- STATE BATTERY, AND METHOD FOR MEASURING THICKNESS OF ALL-SOLID-STATE BATTERY**

(30) Priority: 13.12.2023 KR 20230180793; 14.11.2024 KR 20240162155
(71) Applicant: SK On Co., Ltd., Seoul 03161 (KR)
(72) Inventor: CHOE, Ui Jin, Daejeon 34124 (KR); KWON, Mi Sook, Daejeon 34124 (KR); JEON, Min Jae, Daejeon 34124 (KR)
(74) Representative: Prüfer & Partner mbB Patentanwälte · Rechtsanwälte
(86) International application number: PCT/KR2024/018823
(87) International publication number: WO 2025/127503

(57) **Abstract**

The present disclosure can provide an all-solid-state battery comprising at least one electrode and an electrolyte layer, wherein the electrode includes a current collector and an active material layer, and S_{dR1} according to equation 1 is 1 or more. ${S}_{dR 1} = {S}_{d 2 , 0.2} / {S}_{d 5 , 0.5}$

In equation 1, S_{d2,0.2} is the standard deviation for binding force of the active material layer that is repeatedly measured three times by performing oblique cutting from the surface of the active material layer at a horizontal-direction speed of 2 µm/s and a vertical-direction speed of 0.2 µm/s, and S_{d5,0.5} is the standard deviation for binding force of the active material layer that is repeatedly measured three times by performing oblique cutting from the surface of the active material layer at a horizontal-direction speed of 5 µm/s and a vertical-direction speed of 0.5 µm/s.

## Description

### [Field]

The present disclosure relates to an all-solid-state battery and a method for measuring a thickness of the all-solid-state battery.

### [Background technology]

With the full-scale development of electric vehicles, energy storage batteries, robots, and satellites, research on high-performance secondary batteries, which are rechargeable and capable of repeated charging and discharging as an energy source, has been actively conducted.

Currently commercialized secondary batteries include nickel-cadmium batteries, nickel-hydrogen batteries, nickel-zinc batteries, and lithium secondary batteries. Among these batteries, lithium secondary batteries (hereinafter, referred to as "lithium-ion batteries" or "lithium batteries") have advantages in that, as compared with nickel-based secondary batteries, a memory effect hardly occurs, charging and discharging are freely performed, a self-discharge rate is extremely low, and an energy density is high.

In general, a lithium secondary battery may include a cathode, an anode, a separator, and an electrolyte, and the electrolyte may be in a liquid state at room temperature. However, the liquid electrolyte may leak to the outside due to an external impact, thereby reducing performance of the battery and posing disadvantages in terms of safety. In order to address such issues, an all-solid-state battery, in which the electrolyte is in a solid state at room temperature, has been actively studied.

In addition, when measuring a thickness of a component in the all-solid-state battery, measurements are performed using a micrometer or images obtained from a scanning electron microscope. However, such methods have drawbacks in that measurement errors may be large, a significant amount of preparation is required, or efficiency is low.

### [RELATED ART DOCUMENTS]

(Patent Document 1) Korean Patent Publication No. 10-2016-0060171 (Title of Invention: POSITIVE ELECTRODE FOR ALL-SOLID BATTERY, PRODUCING METHOD THEREOF, AND ALL-SOLID BATTERY COMPRISING SAME)

### [Detailed Description of the Invention]

### [Technical Problem]

One aspect of the present disclosure provides an all-solid-state battery having high reproducibility in which a measured value of binding force has a small deviation even when the binding force is measured at a relatively high speed. One aspect of the present disclosure also provides a method for measuring a binding force within an electrode in an all-solid-state battery while ensuring high reproducibility. One aspect of the present disclosure also provides a method capable of measuring a thickness of the all-solid-state battery more quickly and accurately based on the method for measuring the binding force.

The all-solid-state battery according to one aspect of the present disclosure, and the method for measuring a binding force or a thickness of the all-solid-state battery, may be widely applied to green technology fields such as electric vehicles, battery charging stations, photovoltaic power generation, wind power generation, and the like. In addition, the all-solid-state battery according to one aspect of the present disclosure, and the method for measuring a binding force or a thickness of the all-solid-state battery, may be applied to eco-friendly electric vehicles or hybrid vehicles for suppressing air pollution and greenhouse gas emissions and preventing climate change.

### [Technical solutions]

An all-solid-state battery according to one aspect of the present disclosure includes: at least one electrode; and an electrolyte layer. The electrode includes a current collector and an active material layer. SdR1 defined by Equation 1 below is 1 or more.${S}_{dR 1} = {S}_{d 2 , 0.2} / {S}_{d 5 , 0.5}$

In Equation 1, S_{d2,0.2} is a standard deviation of binding force of the active material layer measured three times by performing oblique cutting from a surface of the active material layer at a horizontal speed of 2 µm/s and a vertical speed of 0.2 µm/s, and S_{d5,0.5} is a standard deviation of binding force of the active material layer measured three times by performing oblique cutting from the surface of the active material layer at a horizontal speed of 5 µm/s and a vertical speed of 0.5 µm/s.

In an embodiment, the S_{dR1} according to Equation 1 may be 10 or less.

In an embodiment, the active material layer may be a cathode active material layer, and S_{d5,0.5} according to Equation 1 may be 0.02 or less.

In an embodiment, the active material layer may be an anode active material layer, and S_{d5,0.5} according to Equation 1 may be 0.02 or less.

In an embodiment, in Equation 1, S_{d2,0.2} and S_{d5,0.5} may be each independently a standard deviation of binding force of the active material layer measured three times by performing oblique cutting at an angle of 2.5 degrees to 6 degrees.

In an embodiment, a binding force of the active material layer may be measured at a cutting depth corresponding to 20% to 80% of a total thickness from a surface of the active material layer.

In an embodiment, a binding force of the active material layer may be measured using a surface and interfacial cutting analysis system (SAICAS) including a blade.

In an embodiment, a binding force P of the active material layer may be measured according to Equation 2 below:
$P = \frac{{F}_{h}}{w}$

In Equation 2, Fₕ is a horizontal force (N) applied to the blade, and w is a width (mm) of the blade.

In an embodiment, a thickness of the active material layer may be in a range of 22 µm to 130 µm.

In an embodiment, the active material layer and the electrolyte layer may be pressed under a pressure of 200 MPa or more and brought into close contact with each other.

In an embodiment, the active material layer may include an active material and a binder.

In an embodiment, the electrolyte layer may include at least one selected from the group consisting of a polymer-based electrolyte, an oxide-based electrolyte, and a sulfide-based electrolyte.

A method for measuring a thickness of an all-solid-state battery according to one aspect of the present disclosure, in which the all-solid-state battery includes at least one electrode and an electrolyte layer, and the electrode includes a current collector and an active material layer, the method includes oblique cutting from a surface of the active material layer, and the oblique cutting is performed at a horizontal speed of 1 µm/s to 10 µm/s and a vertical speed of 0.05 µm/s to 1 µm/s.

In an embodiment, the oblique cutting may be performed at a cutting inclination angle of 2.5 degrees to 6 degrees.

In an embodiment, the oblique cutting may be performed using a surface and interfacial cutting analysis system (SAICAS) including a blade.

In an embodiment, the oblique cutting may include obtaining load data as a function of cutting time, and the method may further include measuring a thickness of the active material layer based on the load data as a function of cutting time.

In an embodiment, the load data as a function of cutting time may include first load data and second load data, the first load data may be a graph having a first axis representing the cutting time and a second axis, perpendicular to the first axis, representing a load value, the second load data may be a graph having a first axis representing the cutting time and a third axis, perpendicular to the first axis, representing a cutting depth, and the load value may be a vertical force applied to the blade.

In an embodiment, the measuring of the thickness of the active material layer may include: deriving a maximum cutting time corresponding to a largest cutting time, among points at which a slope is 0 in a graph of the first load data; deriving a corresponding cutting depth corresponding to the maximum cutting time from a graph of the second load data; and determining the corresponding cutting depth as the thickness of the active material layer.

In an embodiment, a maximum load value in the graph of the first load data may be 3 N or less.

In an embodiment, the measuring of the thickness of the active material layer may include: deriving a point cutting time corresponding to a cutting time at a point at which a slope is 0 in a graph of the first load data; deriving a corresponding cutting depth corresponding to one of the point cutting times within a predetermined range of cutting depth from a graph of the second load data; and determining the corresponding cutting depth as the thickness of the active material layer.

In an embodiment, the predetermined range of cutting depth may be 22 µm or more.

In an embodiment, the deriving of the corresponding cutting depth may include deriving a maximum corresponding cutting depth corresponding to a maximum point cutting time among the point cutting times within a predetermined range of cutting depth, and the maximum corresponding cutting depth may be determined as the thickness of the active material layer.

### [Effect]

According to one aspect of the present disclosure, when the binding force of the electrode active material layer satisfies a predetermined condition, the all-solid-state battery including the same may exhibit excellent electrochemical performance. In addition, the all-solid-state battery may have an excellent charge capacity and excellent charge/discharge characteristics.

According to one aspect of the present disclosure, when the binding force of the electrode active material layer satisfies a predetermined condition, a film strength of the electrode active material layer is high, and thus excellent charge capacity and charge/discharge characteristics may be achieved.

According to one aspect of the present disclosure, the all-solid-state battery including an electrode active material layer having a value of S_{dR1} according to Equation 1 of 1 or more may exhibit excellent charge capacity and charge/discharge characteristics.

According to one aspect of the present disclosure, when the binding force of the electrode active material layer is formed such that a value of S_{dR1} according to Equation 1 is 1 or more, the all-solid-state battery including the same may exhibit excellent charge capacity and charge/discharge characteristics.

According to one aspect of the present disclosure, when a value of S_{dR1} according to Equation 1 is 1 or more, the electrode active material layer may have a dense structure, and in this case, the all-solid-state battery including the same may exhibit excellent charge capacity and charge/discharge performance.

According to one aspect of the present disclosure, even when the binding force is measured at a relatively high speed, a measured value of the binding force has a small deviation, thereby ensuring high reproducibility. According to one aspect of the present disclosure, the binding force within the electrode in the all-solid-state battery may be measured while ensuring high reproducibility. According to one aspect of the present disclosure, based on the method for measuring the binding force, a thickness of the all-solid-state battery may be measured more quickly and accurately.

### [Description of the drawing]

The drawings presented herein are provided as examples of the present disclosure, and ratios of widths, lengths, or thicknesses (or heights) of respective components are provided for describing the present disclosure in detail, and such ratios may differ from those in actual implementations. In addition, in the coordinate system illustrated in the drawings, respective axes may be perpendicular to each other, a direction indicated by an arrow represents a positive (+) direction, and a direction opposite (rotated by 180 degrees) to the direction indicated by the arrow represents a negative (-) direction.
FIG. 1 is a schematic view illustrating at least a portion of an all-solid-state battery according to an embodiment of the present disclosure.
FIGS. 2 to 5 are schematic views illustrating a process of cutting at least a portion of an all-solid-state battery using a cutting device, according to an embodiment of the present disclosure.
FIG. 6 is a schematic view illustrating at least a portion of a cutting device according to an embodiment of the present disclosure.
FIG. 7 is a graph illustrating an example of load data according to cutting time, according to an embodiment of the present disclosure.
FIG. 8 is a graph illustrating an example of first differentiated load data according to an embodiment of the present disclosure.
FIG. 9 is an image obtained by a scanning electron microscope illustrating a cathode according to an embodiment of the present disclosure.

### [Embodiments]

Hereinafter, the present disclosure will be described in detail with reference to the accompanying drawings. However, the present disclosure is not limited to the specific embodiments described herein, and the embodiments are provided only for illustrative purposes.

Among the physical properties referred to in the present disclosure, when a measurement temperature affects the physical properties, unless otherwise specified, the corresponding physical properties are those measured at room temperature and atmospheric pressure.

As used herein, the term "room temperature" refers to a natural temperature without heating or cooling, and may refer to any temperature within a range of 10°C to 30°C, for example, about 15°C or higher, about 18°C or higher, about 20°C or higher, about 23°C or higher, about 27°C or lower, or about 25°C. Unless otherwise specified, a unit of temperature used herein is degrees Celsius (°C).

Among the physical properties referred to in the present disclosure, when a measurement pressure affects the physical properties, unless otherwise specified, the corresponding physical properties are those measured at atmospheric pressure. As used herein, the term "atmospheric pressure" refers to a natural pressure without pressurization or decompression, and generally refers to an atmospheric pressure within a range of about 700 mmHg to 800 mmHg.

As used herein, the expression "a to b" means including a and b and encompassing a range between a and b. For example, the expression "included in an amount of a to b parts by weight" has the same meaning as being included within a range of a to b parts by weight.

As used herein, the term "battery" may be used interchangeably with "cell," and the battery or cell may be a term collectively referring to a battery cell, which is a unit thereof, and a battery module or a battery pack including the battery cell. In addition, in the present disclosure, an all-solid-state battery may be one of various types of batteries and may refer to a battery cell including an electrolyte layer. In addition, the electrolyte layer may be in a solid state at room temperature.

The term "all-solid-state battery" in the present disclosure is used in accordance with a convention in the art as "all-solid state," and the all-solid-state battery may include a liquid or vapor-state material.

As used herein, the term "relatively high speed" may refer to a relatively fast speed. For example, measurement by performing oblique cutting at a horizontal speed of 5 µm/s and a vertical speed of 0.5 µm/s may be regarded as measurement by performing oblique cutting at a relatively high speed, as compared to measurement by performing oblique cutting at a horizontal speed of 2 µm/s and a vertical speed of 0.2 µm/s.

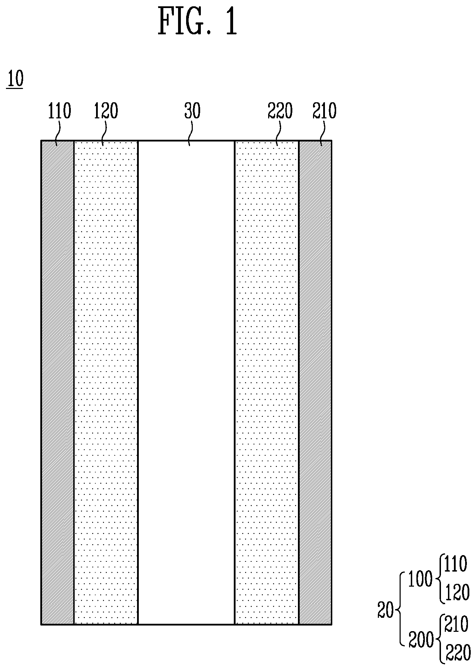

According to one aspect of the present disclosure, even when a binding force is measured at a relatively high speed, an all-solid-state battery 10 having high reproducibility with a small deviation in the measured values of the binding force may be provided (see FIG. 1). According to one aspect of the present disclosure, a method for measuring a binding force within an electrode of the all-solid-state battery 10 with high reproducibility may be provided. According to one aspect of the present disclosure, based on the method for measuring the binding force, a method capable of more rapidly and accurately measuring a thickness of the all-solid-state battery 10 may be provided.

FIG. 1 is a schematic view illustrating at least a portion of the all-solid-state battery 10 according to an embodiment of the present disclosure. The structure of the all-solid-state battery 10 according to one aspect of the present disclosure is not limited to the structure illustrated in FIG. 1, and those skilled in the art may appropriately modify the design of the structure depending on the purpose.

Referring to FIG. 1, the all-solid-state battery 10 according to one aspect of the present disclosure may include at least one electrode 20 and an electrolyte layer 30. A known structure may be referred to for the structure of the all-solid-state battery 10. In addition, the electrode 20 may include a current collector 110 and 210 and an active material layer 120 and 220. In addition, in the electrode 20, the active material layer 120 and 220 may be disposed on one surface or both surfaces of the current collector 110 and 210. In addition, the active material layer 120 and 220 may include an active material. In addition, the active material layer 120 and 220 may include a binder. In addition, as will be described later, the active material layer 120 and 220 may include an active material and a binder, and may further include a material such as a conductive material, as necessary.

On the other hand, in the electrode 20, the active material layer 120 and 220 disposed on one surface of the current collector 110 and 210 may have a single-layer structure or a multilayer structure. In addition, in the electrode 20, the active material layers 120 and 220 disposed on both surfaces of the current collector 110 and 210 may each independently have a single-layer structure or a multilayer structure. When the active material layer 120 and 220 has a multilayer structure, types and content ratios of an active material, a binder, and the like included in each layer may be independently configured.

Referring to FIG. 1, the electrolyte layer 30 may include an electrolyte. The electrolyte may include a solid electrolyte that is in a solid state at room temperature. When necessary, the electrolyte may further include a liquid electrolyte that is in a liquid state at room temperature. On the other hand, the electrolyte may be included in the active material layers 120 and 220 of the electrode 20.

Referring to FIG. 1, the current collectors 110 and 210 may have an appropriate thickness, and although not particularly limited, may have a thickness of, for example, 1 µm to 30 µm. In addition, the active material layers 120 and 220 may have an appropriate thickness, and although not particularly limited, may have a thickness of, for example, 22 µm to 130 µm. The thicknesses of the current collectors 110 and 210 and the active material layers 120 and 220 may be varied depending on design.

On the other hand, in the present specification, when the term "current collector" is used without distinction between a cathode and an anode, the current collector may collectively refer to both a cathode current collector 110 and an anode current collector 210. In addition, in the present specification, when the term "active material layer" is used without distinction between a cathode and an anode, the active material layer may collectively refer to both a cathode active material layer 120 and an anode active material layer 220. In addition, in the present specification, when the term "active material" is used without distinction between a cathode and an anode, the active material may collectively refer to both a cathode active material and an anode active material. In addition, in the present specification, when the term "binder" is used without distinction between a cathode and an anode, the binder may collectively refer to both a cathode binder and an anode binder. In addition, in some cases, when the term "binder" is used without distinction among a cathode, an anode, and an electrolyte layer, the binder may collectively refer to a cathode binder, an anode binder, and an electrolyte binder.

Referring to FIG. 1, the all-solid-state battery 10 according to one aspect of the present disclosure may include, as electrodes, at least one cathode 100 and at least one anode 200. The cathode 100 may refer to a reduction electrode that receives charge carriers when the all-solid-state battery 10 is discharged. The anode 200 may refer to an oxidation electrode that supplies charge carriers when the all-solid-state battery 10 is discharged. On the other hand, the electrolyte layer 30 of the all-solid-state battery 10 may allow the charge carriers to pass therethrough while preventing an electrical short circuit between the cathode 100 and the anode 200. Here, the charge carriers may be lithium ions (Li⁺).

Referring to FIG. 1, in the all-solid-state battery 10 according to one aspect of the present disclosure, the cathode 100 may include a cathode current collector 110 and a cathode active material layer 120. The cathode active material layer 120 may be disposed on one surface or both surfaces of the cathode current collector 110.

Referring to FIG. 1, in the all-solid-state battery 10 according to one aspect of the present disclosure, the cathode current collector 110 is not particularly limited, and may be, for example, a plate structure, a foil structure, or a carbon-coated foil structure made of aluminum (Al), indium (In), copper (Cu), magnesium (Mg), stainless steel, titanium (Ti), iron (Fe), cobalt (Co), nickel (Ni), zinc (Zn), germanium (Ge), lithium (Li), or an alloy thereof. The cathode current collector 110 may be a foil structure including aluminum. The cathode current collector 110 may have an appropriate thickness, for example, a thickness in a range of 1 µm to 30 µm.

Referring to FIG. 1, in the all-solid-state battery 10 according to one aspect of the present disclosure, the cathode active material layer 120 may include a cathode active material. The cathode active material may include a material capable of reversibly intercalating and deintercalating charge carriers (e.g., lithium ions). The cathode active material is not particularly limited as long as the cathode active material is one commonly used in the art, and may include, for example, at least one selected from the group consisting of lithium cobalt oxide (LCO), lithium nickel oxide (LNO), lithium nickel-cobalt oxide (LNCO), lithium nickel-cobalt-aluminum oxide (NCA), lithium nickel-cobalt-manganese oxide (NCM), lithium nickel-cobalt-manganese-aluminum oxide (NCMA), and lithium iron phosphate (LFP).

In addition, the cathode active material layer 120 may include a cathode binder. The cathode binder may include a material capable of increasing an internal binding force of the cathode active material layer 120 and improving binding force with the cathode current collector 110. The cathode binder is not particularly limited as long as the cathode binder is one commonly used in the art, and may include, for example, at least one selected from the group consisting of polyvinylidene fluoride-co-hexafluoropropylene (PVDF-co-HFP), polyvinylidene fluoride (PVDF), polyvinyl alcohol (PVA), styrene-butadiene rubber (SBR), butadiene rubber (BR), acrylonitrile-butadiene rubber (NBR), hydrogenated nitrile-butadiene rubber (HNBR), and polyethylene oxide (PEO).

In addition, the cathode active material layer 120 may include the cathode active material and the cathode binder in an appropriate ratio. The cathode active material layer 120 may include the cathode binder in an amount of about 0.1 parts by weight to about 10 parts by weight based on 100 parts by weight of the cathode active material. When the cathode active material layer 120 includes the cathode active material and the cathode binder in combination as described above, internal binding force may be increased and binding force with the cathode current collector 110 may be improved, thereby securing stability while achieving excellent energy capacity.

In addition, the cathode active material layer 120 may include a conductive material. The conductive material may include a material capable of improving conductivity and/or mobility of lithium ions or electrons. The conductive material is not particularly limited as long as the conductive material is one commonly used in the art, and may include, for example, at least one selected from the group consisting of carbon-based conductive materials such as graphite, carbon black, and carbon nanotubes, and metal-based conductive materials such as tin, tin oxide, titanium oxide, LaSrCoO₃, and LaSrMnO₃.

In addition, the cathode active material layer 120 may include the cathode active material and the conductive material in an appropriate ratio. The cathode active material layer 120 may include the conductive material in an amount of about 0.1 parts by weight to about 10 parts by weight based on 100 parts by weight of the cathode active material. When the cathode active material layer 120 includes the cathode active material and the conductive material in combination as described above, improved conductivity may be provided, thereby achieving excellent energy capacity.

In addition, the cathode active material layer 120 may include an electrolyte as described above. An electrolyte of the same type as that included in the cathode active material layer 120 may be included in the electrolyte layer 30. In addition, the electrolyte included in the cathode active material layer 120 may include at least one selected from the group consisting of a polymer-based electrolyte, an oxide-based electrolyte, and a sulfide-based electrolyte. The electrolyte included in the cathode active material layer 120 may refer to the description of the electrolyte layer 30 to be described later.

In addition, the cathode active material layer 120 may include the cathode active material and the electrolyte in an appropriate ratio. The cathode active material layer 120 may include the electrolyte in an amount of about 1 part by weight to about 30 parts by weight based on 100 parts by weight of the cathode active material. When the cathode active material layer 120 includes the cathode active material and the electrolyte in combination as described above, improved ionic conductivity may be provided.

In addition, the cathode active material layer 120 may further include, when necessary, at least one additive selected from the group consisting of a thickener, a filler, a dispersant, and an ionic conductive agent.

In addition, the cathode active material layer 120 may be made of a cathode active material slurry composition. Specifically, the cathode active material layer 120 may be formed through a process of applying the cathode active material slurry composition onto the cathode current collector 110 and then drying the same. In the present disclosure, the cathode active material layer 120 may refer to the dried cathode active material slurry composition as described above.

The cathode active material slurry composition capable of forming the cathode active material layer 120 may include the above-described cathode active material, cathode binder, conductive material, and the like. In addition, the cathode active material slurry composition may include a solvent in order to secure appropriate processability. The solvent may be determined depending on the cathode active material, the cathode binder, and the like included in the cathode active material slurry composition, and is not particularly limited as long as the solvent is one commonly used in the art. For example, the solvent may be a non-polar solvent, a low-polarity solvent, or a combination thereof. For example, the organic solvent is not particularly limited, but may include at least one selected from the group consisting of tertiary amine-based solvents such as triethylamine; ester-based solvents such as butyl butyrate; aromatic solvents such as benzene, toluene, xylene, methoxybenzene, and anisole; chain aliphatic solvents such as hexane, heptane, octane, nonane, and decane; and cyclic aliphatic solvents such as cycloheptane. In addition, in the process of applying the cathode active material slurry composition and then drying the same, the drying may refer to a process of removing the solvent included in the cathode active material slurry composition such that the cathode active material layer 120 contains the solvent in an amount of 1 wt% or less, 0.5 wt% or less, or 0.1 wt% or less based on a total weight. In addition, the method of applying the cathode active material slurry composition may be performed according to a known method, and may be performed, for example, by a method using a slot die, a doctor blade method, a dip method, a reverse roll method, a direct roll method, a gravure method, an extrusion method, or a brush coating method. In addition, the cathode active material slurry composition may be applied in an appropriate loading amount in consideration of a desired thickness of the cathode active material layer 120. On the other hand, the cathode active material layer 120 may be subjected to a rolling process for miniaturization and higher energy density. The rolling process may be performed according to a known method, for example, by using a rolling jig.

The cathode active material layer 120 may be in a state in which the cathode active material slurry composition is dried as described above and the solvent is removed by the drying. Here, the state in which the solvent is removed may refer to a state in which the solvent is included in an amount of 1 wt% or less, 0.5 wt% or less, or 0.1 wt% or less based on a total weight of the cathode active material layer 120, or a state in which the solvent is not included.

Referring to FIG. 1, in the all-solid-state battery 10 according to one aspect of the present disclosure, the electrode active material layers 120, 220 may have an appropriate thickness. Although not particularly limited, for example, a thickness of the electrode active material layers 120 and 220 may be 22 µm or more, or 130 µm or less.

The cathode active material layer 120 may have an appropriate thickness. Although not particularly limited, for example, the thickness of the cathode active material layer 120 may be 22 µm or more, 30 µm or more, 31 µm or more, 32 µm or more, 33 µm or more, 34 µm or more, 35 µm or more, 36 µm or more, 37 µm or more, 38 µm or more, 39 µm or more, 40 µm or more, 41 µm or more, 42 µm or more, 43 µm or more, 44 µm or more, 45 µm or more, 46 µm or more, 47 µm or more, 48 µm or more, 49 µm or more, or 50 µm or more, and/or 130 µm or less, 125 µm or less, 120 µm or less, 115 µm or less, 110 µm or less, 105 µm or less, 100 µm or less, 95 µm or less, 90 µm or less, 85 µm or less, or 80 µm or less. The thickness of the cathode active material layer 120 may fall within a range formed by appropriately selecting the above-described upper and lower limits.

Referring to FIG. 1, in the all-solid-state battery 10 according to one aspect of the present disclosure, the anode 200 may include an anode current collector 210 and an anode active material layer 220. The anode active material layer 220 may be disposed on one surface or both surfaces of the anode current collector 210.

Referring to FIG. 1, in the all-solid-state battery 10 according to one aspect of the present disclosure, the anode current collector 210 may be a plate structure, a foil structure, or a carbon-coated foil structure formed of copper (Cu), aluminum (Al), indium (In), magnesium (Mg), stainless steel, titanium (Ti), iron (Fe), cobalt (Co), nickel (Ni), zinc (Zn), germanium (Ge), lithium (Li), or an alloy thereof. The anode current collector 210 may be a foil structure including copper. The anode current collector 210 may have an appropriate thickness and may have, for example, a thickness in a range of 1 µm to 30 µm.

Referring to FIG. 1, in the all-solid-state battery 10 according to one aspect of the present disclosure, the anode active material layer 220 may include an anode active material. The anode active material is not particularly limited as long as the anode active material is one commonly used in the art, and may include, for example, at least one selected from the group consisting of a carbon-based material and an alloy-forming element that forms an alloy or a compound with lithium by an electrochemical reaction during charging. The carbon-based material may include at least one selected from the group consisting of graphite, carbon black, and graphene. The carbon black may include, for example, acetylene black, furnace black, and Ketjen black. The alloy-forming element may include, for example, at least one selected from the group consisting of gold, platinum, palladium, silicon, silver, aluminum, bismuth, tin, and zinc. On the other hand, the anode active material may further include a silicon-based compound. The silicon-based compound may include, for example, at least one selected from the group consisting of silicon (Si), silicon oxide, and silicon carbide. In addition, the silicon-based compound may be doped with a metal or may be undoped, depending on the case. The doping metal may include, for example, at least one selected from the group consisting of lithium (Li), magnesium (Mg), calcium (Ca), iron (Fe), titanium (Ti), vanadium (V), and aluminum (Al).

In addition, the anode active material layer 220 may include an anode binder. The anode binder may include a material capable of increasing an internal binding force of the anode active material layer 220 and improving binding force with the anode current collector 210. The anode binder is not particularly limited as long as the anode binder is one commonly used in the art, and may include, for example, at least one selected from the group consisting of polyvinylidene fluoride-co-hexafluoropropylene (PVDF-co-HFP), polyvinylidene fluoride (PVDF), polyvinyl alcohol (PVA), styrene-butadiene rubber (SBR), butadiene rubber (BR), acrylonitrile-butadiene rubber (NBR), hydrogenated nitrile-butadiene rubber (HNBR), and polyethylene oxide (PEO).

In addition, the anode active material layer 220 may include the anode active material and the anode binder in an appropriate ratio. The anode active material layer 220 may include the anode binder in an amount of about 0.1 parts by weight to about 10 parts by weight based on 100 parts by weight of the anode active material. When the anode active material layer 220 includes the anode active material and the anode binder in combination as described above, internal binding force may be increased and binding force with the anode current collector 210 may be improved, thereby securing stability while achieving excellent energy capacity.

In addition, the anode active material layer 220 may include a conductive material. The conductive material may include a material capable of improving conductivity and/or mobility of lithium ions or electrons. The conductive material is not particularly limited as long as the conductive material is one commonly used in the art, and may include, for example, at least one selected from the group consisting of carbon-based conductive materials such as graphite, carbon black, and carbon nanotubes, and metal-based conductive materials such as tin, tin oxide, titanium oxide, LaSrCoO₃, and LaSrMnO₃.

In addition, the anode active material layer 220 may include the anode active material and the conductive material in an appropriate ratio. The anode active material layer 220 may include the conductive material in an amount of about 0.1 parts by weight to about 10 parts by weight based on 100 parts by weight of the anode active material. When the anode active material layer 220 includes the anode active material and the conductive material in combination as described above, improved conductivity may be provided, thereby achieving excellent energy capacity.

In addition, the anode active material layer 220 may include an electrolyte as described above. An electrolyte of the same type as that included in the anode active material layer 220 may be included in the electrolyte layer 30. In addition, the electrolyte included in the anode active material layer 220 may include at least one selected from the group consisting of a polymer-based electrolyte, an oxide-based electrolyte, and a sulfide-based electrolyte. The electrolyte included in the anode active material layer 220 may refer to the description of the electrolyte layer 30 to be described later.

In addition, the anode active material layer 220 may include the anode active material and the electrolyte in an appropriate ratio. The anode active material layer 220 may include the electrolyte in an amount of about 1 part by weight to about 100 parts by weight based on 100 parts by weight of the anode active material. When the anode active material layer 220 includes the anode active material and the electrolyte in combination as described above, improved ionic conductivity may be provided.

In addition, the anode active material layer 220 may further include, when necessary, at least one additive selected from the group consisting of a thickener, a filler, a dispersant, and an ionic conductive agent.

In addition, the anode active material layer 220 may be formed from an anode active material slurry composition. Specifically, the anode active material layer 220 may be formed through a process of applying the anode active material slurry composition onto the anode current collector 210 and then drying the same. In the present disclosure, the anode active material layer 220 may refer to the dried anode active material slurry composition as described above.

The anode active material slurry composition capable of forming the anode active material layer 220 may include the above-described anode active material, anode binder, conductive material, and the like. In addition, the anode active material slurry composition may include a solvent in order to secure appropriate processability. The solvent may be determined depending on the anode active material, the anode binder, and the like included in the anode active material slurry composition, and is not particularly limited as long as the solvent is one commonly used in the art. For example, the solvent may be a non-polar solvent, a low-polarity solvent, or a combination thereof. For example, the organic solvent is not particularly limited, but may include at least one selected from the group consisting of tertiary amine-based solvents such as triethylamine; ester-based solvents such as butyl butyrate; aromatic solvents such as benzene, toluene, xylene, methoxybenzene, and anisole; chain aliphatic solvents such as hexane, heptane, octane, nonane, and decane; and cyclic aliphatic solvents such as cycloheptane.

In addition, in the process of applying the anode active material slurry composition and then drying the same, the drying may refer to a process of removing the solvent included in the anode active material slurry composition such that the anode active material layer 220 contains the solvent in an amount of 1 wt% or less, 0.5 wt% or less, or 0.1 wt% or less based on a total weight. In addition, the method of applying the anode active material slurry composition may be performed according to a known method, and may be performed, for example, by a method using a slot die, a doctor blade method, a dip method, a reverse roll method, a direct roll method, a gravure method, an extrusion method, or a brush coating method. In addition, the anode active material slurry composition may be applied in an appropriate loading amount in consideration of a desired thickness of the anode active material layer 220. On the other hand, the anode active material layer 220 may be subjected to a rolling process for miniaturization and higher energy density. The rolling process may be performed according to a known method, for example, by using a rolling jig.

The anode active material layer 220 may be in a state in which the anode active material slurry composition is dried as described above and the solvent is removed by the drying. Here, the state in which the solvent is removed may refer to a state in which the solvent is included in an amount of 1 wt% or less, 0.5 wt% or less, or 0.1 wt% or less based on a total weight of the anode active material layer 220, or a state in which the solvent is not included.

Referring to FIG. 1, in the all-solid-state battery 10 according to one aspect of the present disclosure, the anode active material layer 220 may have an appropriate thickness. Although not particularly limited, for example, the thickness of the anode active material layer 220 may be 22 µm or more, 30 µm or more, 31 µm or more, 32 µm or more, 33 µm or more, 34 µm or more, 35 µm or more, 36 µm or more, 37 µm or more, 38 µm or more, 39 µm or more, 40 µm or more, 41 µm or more, 42 µm or more, 43 µm or more, 44 µm or more, 45 µm or more, 46 µm or more, 47 µm or more, 48 µm or more, 49 µm or more, or 50 µm or more, and/or 130 µm or less, 125 µm or less, 120 µm or less, 115 µm or less, 110 µm or less, 105 µm or less, 100 µm or less, 95 µm or less, 90 µm or less, 85 µm or less, or 80 µm or less. The thickness of the anode active material layer 220 may fall within a range formed by appropriately selecting the above-described upper and lower limits.

Referring to FIG. 1, the all-solid-state battery 10 according to one aspect of the present disclosure may include the electrolyte layer 30 as described above. The electrolyte layer 30 may include an electrolyte. The electrolyte may include a solid electrolyte that is in a solid state at room temperature.

The electrolyte layer 30 may include at least one selected from the group consisting of a polymer-based electrolyte, an oxide-based electrolyte, and a sulfide-based electrolyte. Here, the polymer-based electrolyte, the oxide-based electrolyte, and the sulfide-based electrolyte may be, for example, solid electrolytes that are in a solid state at room temperature.

On the other hand, the electrolyte layer 30 may have a single-layer structure or a multilayer structure. When the electrolyte layer 30 has a multilayer structure, types and content ratios of an electrolyte and an electrolyte binder included in each layer may also be independently configured.

The polymer-based electrolyte may include at least one selected from the group consisting of a solid polymer electrolyte and a polymer gel electrolyte. The solid polymer electrolyte may be formed by adding a resin to a solvated lithium salt, each independently. The polymer gel electrolyte may be formed by incorporating an organic electrolyte containing an organic solvent and a lithium salt into a resin.

The solid polymer electrolyte is not particularly limited as long as the solid polymer electrolyte is an ion-conductive material commonly used in the art, and may include, for example, at least one selected from the group consisting of a polyether-based polymer, a polycarbonate-based polymer, an acrylate-based polymer, a polysiloxane-based polymer, a phosphazene-based polymer, polyethylene oxide, a polyethylene derivative, an alkylene oxide derivative, a phosphate ester polymer, polyagitation lysine, polyester sulfide, polyvinyl alcohol, and polyvinylidene fluoride. However, this is merely an example.

The polymer gel electrolyte is not particularly limited as long as the polymer gel electrolyte is a material in which an organic electrolyte containing a lithium salt is incorporated into a resin and is commonly used in the art, and may include, for example, at least one selected from the group consisting of a polyvinyl chloride (PVC)-based resin, a poly(methyl methacrylate) (PMMA)-based resin, polyacrylonitrile (PAN), poly(vinylidene fluoride) (PVDF), and poly(vinylidene fluoride-hexafluoropropylene) (PVDF-HFP). However, this is merely an example.

The oxide-based electrolyte may be a compound containing oxygen atoms (O), having ionic conductivity of a metal belonging to Group 1 or Group 2 of the periodic table, and having electronic insulating properties.

The oxide-based electrolyte is not particularly limited as long as the oxide-based electrolyte is one commonly used in the art, and may include, for example, at least one selected from the group consisting of a garnet-type oxide-based electrolyte (e.g., LLZO), a perovskite-type oxide-based electrolyte (e.g., Li₀.₅La₀.₅TiO₃), a NASICON (sodium super ionic conductor)-type oxide-based electrolyte (e.g., LiTi₂P₃O₁₂, Li_{1+xₕ+γₕ}(Al, Ga)_{xₕ}(Ti, Ge)_{2-xₕ}Si_{γh}P_{3-γh}O₁₂ (where 0 ≤ xₕ ≤ 1 and 0 ≤ yₕ ≤ 1)), and a LISICON (lithium super ionic conductor)-type oxide-based electrolyte (e.g., Li₃.₅Zn₀.₂₅GeO₄). However, this is merely an example.

The sulfide-based electrolyte may be a compound containing sulfur atoms (S), having ionic conductivity of a metal belonging to Group 1 or Group 2 of the periodic table, and having electronic insulating properties. The sulfide-based electrolyte may include at least lithium (Li) and sulfur (S), and may further include phosphorus (P) or other elements as necessary.

The sulfide-based electrolyte is not particularly limited as long as the sulfide-based electrolyte is one commonly used in the art, and may include, for example, at least one selected from the group consisting of Li₆PS₅Cl, Li₂S-P₂S₅, Li₂S-P₂S₅-LiCl, Li₂S-P₂S₅-H₂S, Li₂S-P₂S₅-H₂S-LiCl, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SiS₂-LiCl, Li₂S-P₂S₅-SnS, Li₂S-P₂S₅-Al₂S₃, Li₂S-GeS₂, Li₂S-GeS₂-ZnS, Li₂S-Ga₂S₃, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, Li₂S-SiS₂-P₂S₅-LiI, Li₂S-SiS₂-LiI, Li₂S-SiS₂-Li₄SiO₄, Li₂S-SiS₂-Li₃PO₄, and Li₁₀GeP₂S₁₂. However, this is merely an example.

The sulfide-based electrolyte may be synthesized using an amorphization method, for example, by a mechanical milling method, a solution method, or a melt-quenching method. A specific synthesis method may be selected from methods known in the art.

The electrolyte layer 30 according to one aspect of the present disclosure may include the electrolyte in an amount within a range of 90 wt% to 100 wt% based on a total weight of the electrolyte layer 30.

The electrolyte layer 30 may include an electrolyte binder in order to secure binding force between electrolytes and to improve binding force with the electrode 20. The electrolyte binder may include a binder included in the active material layers 120, 220 of the electrode 20. The electrolyte binder is not particularly limited as long as the electrolyte binder is one commonly used in the art, and may include, for example, at least one selected from the group consisting of polytetrafluoroethylene (PTFE), polyethylene oxide (PEO), polyethylene glycol (PEG), polyacrylonitrile (PAN), polyvinyl chloride (PVC), polymethyl methacrylate (PMMA), polypropylene oxide (PPO), polyphosphazene, polysiloxane, polydimethylsiloxane (PDMS), polyvinylidene fluoride (PVDF), a polyvinylidene fluoride-hexafluoropropylene copolymer (PVDF-HFP), a polyvinylidene fluoride-chlorotrifluoroethylene copolymer (PVDF-CTFE), a polyvinylidene fluoride-tetrafluoroethylene copolymer (PVDF-TFE), polyvinylidene carbonate, polyvinylpyrrolidinone, styrene-butadiene rubber (SBR), nitrile-butadiene rubber (NBR), hydrogenated nitrile-butadiene rubber (HNBR), and butadiene rubber (BR). However, this is merely an example.

The electrolyte layer 30 according to one aspect of the present disclosure may include the electrolyte binder in an amount within a range of about 0.1 parts by weight to about 10 parts by weight based on 100 parts by weight of the electrolyte.

In addition, the electrolyte layer 30 may be formed from an electrolyte layer slurry composition. Specifically, the electrolyte layer 30 may be formed by directly applying the electrolyte layer slurry composition onto the electrode 20, or by applying the same onto a release film or the like and then drying the same. In the present disclosure, the electrolyte layer 30 may refer to the dried electrolyte layer slurry composition as described above. In addition, a method of forming the electrolyte layer 30 is not particularly limited to the above-described method, and a method applicable in the art may be used.

The electrolyte layer slurry composition capable of forming the electrolyte layer 30 may include the above-described electrolyte, electrolyte binder, and the like. In addition, the electrolyte layer slurry composition may include a solvent for forming the electrolyte layer in order to secure appropriate processability. The solvent for forming the electrolyte layer may be determined depending on the electrolyte, the electrolyte binder, and the like, and is not particularly limited as long as the solvent is one commonly used in the art. The solvent for forming the electrolyte layer may particularly include a non-polar solvent having little reactivity with the electrolyte and having no or a very small dipole moment within a molecule, a low-polarity solvent, or a combination thereof. For example, the organic solvent is not particularly limited, but may include at least one selected from the group consisting of tertiary amine-based solvents such as triethylamine; ester-based solvents such as butyl butyrate; aromatic solvents such as benzene, toluene, xylene, methoxybenzene, and anisole; chain aliphatic solvents such as hexane, heptane, octane, nonane, and decane; and cyclic aliphatic solvents such as cycloheptane.

In addition, in the process of applying the electrolyte layer slurry composition onto the electrode 20 or a release film and then drying the same, the drying may refer to a process of removing the solvent for forming the electrolyte layer included in the electrolyte layer slurry composition such that the electrolyte layer 30 contains the solvent for forming the electrolyte layer in an amount of 1 wt% or less, 0.5 wt% or less, or 0.1 wt% or less based on a total weight. In addition, the method of applying the electrolyte layer slurry composition is not particularly limited as long as the method is a known method used in the art, and the method of applying the cathode or anode active material slurry described above may be referred to.

The electrolyte layer 30 may be in a state in which the electrolyte layer slurry composition is dried as described above and the solvent for forming the electrolyte layer is removed by the drying. Here, the state in which the solvent for forming the electrolyte layer is removed may refer to a state in which the solvent for forming the electrolyte layer is included in an amount of 1 wt% or less, 0.5 wt% or less, or 0.1 wt% or less based on a total weight of the electrolyte layer 30, or a state in which the solvent for forming the electrolyte layer is not included.

In the all-solid-state battery 10 according to one aspect of the present disclosure, at least one electrode 100 or 200 and the electrolyte layer 30 may be in close contact with each other by being pressed under a pressure within a predetermined range. A pressure within a predetermined range applied to bring the electrode 100 and 200 and the electrolyte layer 30 into close contact (also referred to as a forming pressure) may be 200 MPa or more, 210 MPa or more, 220 MPa or more, 230 MPa or more, 240 MPa or more, 250 MPa or more, 260 MPa or more, 270 MPa or more, 280 MPa or more, 290 MPa or more, or 300 MPa or more, and/or 700 MPa or less, 690 MPa or less, 680 MPa or less, 670 MPa or less, 660 MPa or less, 650 MPa or less, 640 MPa or less, 630 MPa or less, 620 MPa or less, 610 MPa or less, or 600 MPa or less. The pressure may fall within a range formed by appropriately selecting the above-described upper and lower limits. When the pressure satisfies the above-described range, the active material, conductive material, binder, and electrolyte included in the electrode 100, 200 may be in close contact with each other to form a dense structure, and the electrolyte and the electrolyte binder included in the electrolyte layer 30 may also be in close contact with each other to form a dense structure. As will be described later, when the electrode 100 and 200 and the electrolyte layer 30 are brought into close contact with each other under a forming pressure within the above range, even when binding force is measured at a relatively high speed, a measured value of the binding force has a small deviation, thereby ensuring high reproducibility.

In the all-solid-state battery 10 according to one aspect of the present disclosure, an active material layer 120 and 220 of at least one electrode 100 and 200 and the electrolyte layer 30 may be in close contact with each other by being pressed under a pressure within a predetermined range. A pressure within a predetermined range applied to bring the active material layers 120 and 220 and the electrolyte layer 30 into close contact (also referred to as a forming pressure) may be 200 MPa or more, 210 MPa or more, 220 MPa or more, 230 MPa or more, 240 MPa or more, 250 MPa or more, 260 MPa or more, 270 MPa or more, 280 MPa or more, 290 MPa or more, or 300 MPa or more, and/or 700 MPa or less, 690 MPa or less, 680 MPa or less, 670 MPa or less, 660 MPa or less, 650 MPa or less, 640 MPa or less, 630 MPa or less, 620 MPa or less, 610 MPa or less, or 600 MPa or less. The pressure may fall within a range formed by appropriately selecting the above-described upper and lower limits. When the pressure satisfies the above-described range, the active material, conductive material, binder, and electrolyte included in the active material layers 120 and 220 may be in close contact with each other to form a dense structure, and the electrolyte and the electrolyte binder included in the electrolyte layer 30 may also be in close contact with each other to form a dense structure. As will be described later, when the active material layers 120 and 220 and the electrolyte layer 30 are brought into close contact with each other under a forming pressure within the above range, even when binding force is measured at a relatively high speed, a measured value of the binding force has a small deviation, thereby ensuring high reproducibility. In addition, in the all-solid-state battery according to the present disclosure, as the active material layers 120 and 220 and the electrolyte layer 30 are brought into close contact by being pressed under a pressure satisfying the above-described range, the active material layers 120 and 220 may have high film strength, and an all-solid-state battery having excellent charge/discharge capacity may be realized.

On the other hand, in the all-solid-state battery 10 according to one aspect of the present disclosure, the active material layer 120 and 220 of at least one electrode 100 and 200 may be subjected to a rolling process under a pressure within a predetermined range. Each of the active material layers 120 and 220 may be independently rolled under a pressure of 200 MPa or more, 210 MPa or more, 220 MPa or more, 230 MPa or more, 240 MPa or more, 250 MPa or more, 260 MPa or more, 270 MPa or more, 280 MPa or more, 290 MPa or more, or 300 MPa or more, and/or 700 MPa or less, 690 MPa or less, 680 MPa or less, 670 MPa or less, 660 MPa or less, 650 MPa or less, 640 MPa or less, 630 MPa or less, 620 MPa or less, 610 MPa or less, or 600 MPa or less. The rolling pressure may fall within a range formed by appropriately selecting the above-described upper and lower limits. When the rolling pressure satisfies the above-described range, the active material, conductive material, binder, and electrolyte included in the active material layers 120 and 220 may be in close contact with each other to form a dense structure. Accordingly, the active material layers 120 and 220 may have improved film strength, and thus an all-solid-state battery including the active material layers 120 and 220 may exhibit excellent electrochemical performance. In addition, even when binding force of the active material layers 120 and 220 is measured at a relatively high speed, a measured value of the binding force has a small deviation, thereby ensuring high reproducibility.

The all-solid-state battery 10 according to one aspect of the present disclosure may have an S_{dR1} value according to Equation 1 of 1 or more, 1.1 or more, 1.2 or more, 1.3 or more, 1.4 or more, 1.5 or more, 1.6 or more, 1.7 or more, 1.8 or more, 1.9 or more, or 2 or more. An upper limit of the S_{dR1} value according to Equation 1 is not particularly limited, but may be, for example, 10 or less, 9.5 or less, 9 or less, 8.5 or less, 8 or less, 7.5 or less, 7 or less, 6.5 or less, 6 or less, 5.5 or less, or 5 or less. The S_{dR1} value according to Equation 1 may have a value within a range equal to or greater than the above-described lower limit and equal to or less than the above-described upper limit.

When the S_{dR1} value according to Equation 1 satisfies the above-described range, the all-solid-state battery may exhibit excellent electrochemical performance. In addition, the all-solid-state battery may have an excellent charge capacity and excellent charge/discharge characteristics.

Further, when the S_{dR1} value according to Equation 1 satisfies the above-described range, the electrode active material layer may have high film strength, thereby providing excellent charge capacity and charge/discharge characteristics. In addition, when the S_{dR1} value according to Equation 1 satisfies the above-described range, an active material layer having a dense structure may be realized, and accordingly, the all-solid-state battery may exhibit excellent charge capacity and charge/discharge characteristics. In addition, even when binding force is measured at a relatively high speed, a measured value of the binding force has a small deviation, thereby ensuring high reproducibility.${S}_{dR 1} = {S}_{d 2 , 0.2} / {S}_{d 5 , 0.5}$

In Equation 1, S_{d₂,0.2} is a standard deviation of binding force of the active material layers 120, 220, measured three times by oblique cutting from a surface of the active material layers 120, 220 at a horizontal speed of 2 µm/s and a vertical speed of 0.2 µm/s, and S_{d₅,0.5} is a standard deviation of binding force of the active material layers 120, 220, measured three times by oblique cutting from the surface of the active material layers 120, 220 at a horizontal speed of 5 µm/s and a vertical speed of 0.5 µm/s. On the other hand, when measuring the binding force of the active material layers 120 and 220, the measurement was performed while maintaining the horizontal speed during the oblique cutting.

On the other hand, in the all-solid-state battery 10 according to one aspect of the present disclosure, as described above, by bringing components within the active material layers 120 and 220 into close contact under a forming pressure within the above-described range to form a dense structure, the S_{dR1} according to Equation 1 may be controlled within the above-described range. In addition, the binding force may be controlled such that the S_{dR1} according to Equation 1 falls within the above-described range by adjusting types and contents of the active material, conductive material, binder, solvent, and the like used in manufacturing the active material layer, or by adjusting a loading amount or dispersibility of a slurry for forming the active material layer. However, the embodiment of the present disclosure is not limited thereto.

In the all-solid-state battery 10 according to one aspect of the present disclosure, the active material layer 120 and 220 may be a cathode active material layer 120. In this case, the S_{d5,0.5} value according to Equation 1 may be 0.02 or less, 0.019 or less, or 0.018 or less. As the S_{d5,0.5} value approaches 0, the physical properties are improved, and a lower limit thereof is not particularly limited, but may be 0 or more, greater than 0, or 0.001 or more. When the active material layer 120 and 220 is the cathode active material layer 120, and the S_{d₅,0.5} value according to Equation 1 falls within the above-described range, the all-solid-state battery including the cathode active material layer 120 may exhibit improved electrochemical performance, and even when binding force is measured at a relatively high speed, a measured value of the binding force has a small deviation, thereby ensuring high reproducibility.

In the all-solid-state battery 10 according to one aspect of the present disclosure, the active material layer 120 and 220 may be an anode active material layer 220. In this case, the S_{d5,0.5} value according to Equation 1 may be 0.02 or less, 0.019 or less, 0.018 or less, 0.017 or less, 0.016 or less, 0.015 or less, 0.014 or less, 0.013 or less, 0.012 or less, 0.011 or less, 0.009 or less, 0.008 or less, 0.007 or less, 0.006 or less, 0.005 or less, or 0.004 or less. As the S_{d₅,0.5} value approaches 0, the physical properties are improved, and a lower limit thereof is not particularly limited, but may be 0 or more, greater than 0, or 0.0001 or more. When the active material layer 120 and 220 is the anode active material layer 220, and the S_{d₅,0.5} value according to Equation 1 falls within the above-described range, charge/discharge performance of the all-solid-state battery including the anode active material layer 220 may be improved, and even when binding force is measured at a relatively high speed, a measured value of the binding force has a small deviation, thereby ensuring high reproducibility.

The all-solid-state battery 10 according to one aspect of the present disclosure may have an S_{dR1A} value according to Equation 1A of 1 or more, 1.1 or more, 1.2 or more, 1.3 or more, 1.4 or more, 1.5 or more, 1.6 or more, 1.7 or more, 1.8 or more, 1.9 or more, 2 or more, 2.1 or more, 2.2 or more, 2.3 or more, 2.4 or more, 2.5 or more, 2.6 or more, 2.7 or more, 2.8 or more, 2.9 or more, 3 or more, 3.1 or more, 3.2 or more, or 3.3 or more. An upper limit of the S_{dR1A} value according to Equation 1A is not particularly limited, but may be, for example, 10 or less, 9.5 or less, 9 or less, 8.5 or less, 8 or less, 7.5 or less, 7 or less, 6.5 or less, 6 or less, 5.5 or less, or 5 or less. The S_{dR1A} value according to Equation 1A may fall within a range equal to or greater than the above-described lower limit and equal to or less than the above-described upper limit. When the S_{dR1A} value according to Equation 1A satisfies the above-described range, a cathode active material layer of the all-solid-state battery may have excellent film strength and improved charge capacity. In addition, even when binding force is measured at a relatively high speed, a measured value of the binding force has a small deviation, thereby ensuring high reproducibility.${S}_{dR 1 A} = {S}_{dA 2 , 0.2} / {S}_{dA 5 , 0.5}$

In Equation 1A, S_{dA2,0.2} is a standard deviation of binding force of the cathode active material layer 120, measured three times by oblique cutting from a surface of the cathode active material layer 120 at a horizontal speed of 2 µm/s and a vertical speed of 0.2 µm/s, and S_{dA5,0.5} is a standard deviation of binding force of the cathode active material layer 120, measured three times by oblique cutting from the surface of the cathode active material layer 120 at a horizontal speed of 5 µm/s and a vertical speed of 0.5 µm/s.

On the other hand, in the all-solid-state battery 10 according to one aspect of the present disclosure, as described above, by bringing components within the cathode active material layer 120 into close contact under a forming pressure within the above-described range to form a dense structure, the S_{dR1A} according to Equation 1A may be controlled within the above-described range. In addition, the binding force may be controlled such that the S_{dR1} according to Equation 1 falls within the above-described range by adjusting types and contents of the active material, conductive material, binder, solvent, and the like used in manufacturing the active material layer, or by adjusting a loading amount or dispersibility of a slurry for forming the active material layer. However, the embodiment of the present disclosure is not limited thereto.

In the all-solid-state battery 10 according to one aspect of the present disclosure, the S_{dA5,0.5} value according to Equation 1A may be 0.02 or less, 0.019 or less, or 0.018 or less. As the S_{dA5,0.5} value approaches 0, the physical properties are improved, and a lower limit thereof is not particularly limited, but may be 0 or more, greater than 0, or 0.001 or more. When the S_{dA5,0.5} value according to Equation 1A falls within the above-described range, the all-solid-state battery including the cathode active material layer may exhibit excellent electrochemical performance, and even when binding force is measured at a relatively high speed, a measured value of the binding force has a small deviation, thereby ensuring high reproducibility.

The all-solid-state battery 10 according to one aspect of the present disclosure may have a S_{dR1B} value according to Equation 1B of 1 or more, 1.1 or more, 1.2 or more, 1.3 or more, 1.4 or more, 1.5 or more, 1.6 or more, 1.7 or more, 1.8 or more, 1.9 or more, 2 or more, or 2.1 or more. An upper limit of the S_{dR1B} value according to Equation 1B is not particularly limited, but may be, for example, 10 or less, 9.5 or less, 9 or less, 8.5 or less, 8 or less, 7.5 or less, 7 or less, 6.5 or less, 6 or less, 5.5 or less, 5 or less, 4.5 or less, or 4 or less. The S_{dR1B} value according to Equation 1B may fall within a range equal to or greater than the above-described lower limit and equal to or less than the above-described upper limit. When the S_{dR1B} value according to Equation 1B falls within the above-described range, an anode active material layer of the all-solid-state battery may have a dense microstructure, thereby achieving a high charge capacity. In addition, even when binding force is measured at a relatively high speed, a measured value of the binding force has a small deviation, thereby ensuring high reproducibility.${S}_{dR 1 B} = {S}_{dB 2 , 0.2} / {S}_{dB 5 , 0.5}$

In Equation 1B, S_{dB2,0.2} is a standard deviation of binding force of the anode active material layer 220, measured three times by oblique cutting from a surface of the anode active material layer 220 at a horizontal speed of 2 µm/s and a vertical speed of 0.2 µm/s, and S_{dB5,0.5} is a standard deviation of binding force of the anode active material layer 220, measured three times by oblique cutting from the surface of the anode active material layer 220 at a horizontal speed of 5 µm/s and a vertical speed of 0.5 µm/s.

On the other hand, in the all-solid-state battery 10 according to one aspect of the present disclosure, as described above, by bringing components within the anode active material layer 220 into close contact under a forming pressure within the above-described range to form a dense structure, the S_{dR1B} according to Equation 1B may be controlled within the above-described range. However, the embodiment of the present disclosure is not limited thereto.

In the all-solid-state battery 10 according to one aspect of the present disclosure, the S_{dB5,0.5} value according to Equation 1B may be 0.02 or less, 0.019 or less, 0.018 or less, 0.017 or less, 0.016 or less, 0.015 or less, 0.014 or less, 0.013 or less, 0.012 or less, 0.011 or less, 0.009 or less, 0.008 or less, 0.007 or less, 0.006 or less, 0.005 or less, or 0.004 or less. As the S_{dB5,0.5} value approaches 0, the physical properties are improved, and a lower limit thereof is not particularly limited, but may be 0 or more, greater than 0, or 0.0001 or more. When the S_{dB5,0.5} value according to Equation 1B falls within the above-described range, the all-solid-state battery including the anode active material layer may exhibit improved electrochemical performance, and even when binding force is measured at a relatively high speed, a measured value of the binding force has a small deviation, thereby ensuring high reproducibility.

The all-solid-state battery 10 according to one aspect of the present disclosure may have an RAB value according to Equation 1C of 1 or more, 1.1 or more, 1.2 or more, 1.3 or more, 1.4 or more, or 1.5 or more. An upper limit of the RAB value according to Equation 1C is not particularly limited, but may be, for example, 10 or less, 9.5 or less, 9 or less, 8.5 or less, 8 or less, 7.5 or less, 7 or less, 6.5 or less, 6 or less, 5.5 or less, or 5 or less. The RAB value according to Equation 1C may fall within a range equal to or greater than the above-described lower limit and equal to or less than the above-described upper limit. When the RAB value according to Equation 1C satisfies the above-described range, an all-solid-state battery having excellent charge/discharge performance may be realized, and even when binding force is measured at a relatively high speed, a measured value of the binding force has a small deviation, thereby ensuring high reproducibility.${R}_{AB} = {S}_{dR 1 A} / {S}_{dR 1 B}$

In Equation 1C, S_{dR1A} is as defined in Equation 1A, and S_{dR1B} is as defined in Equation 1B.

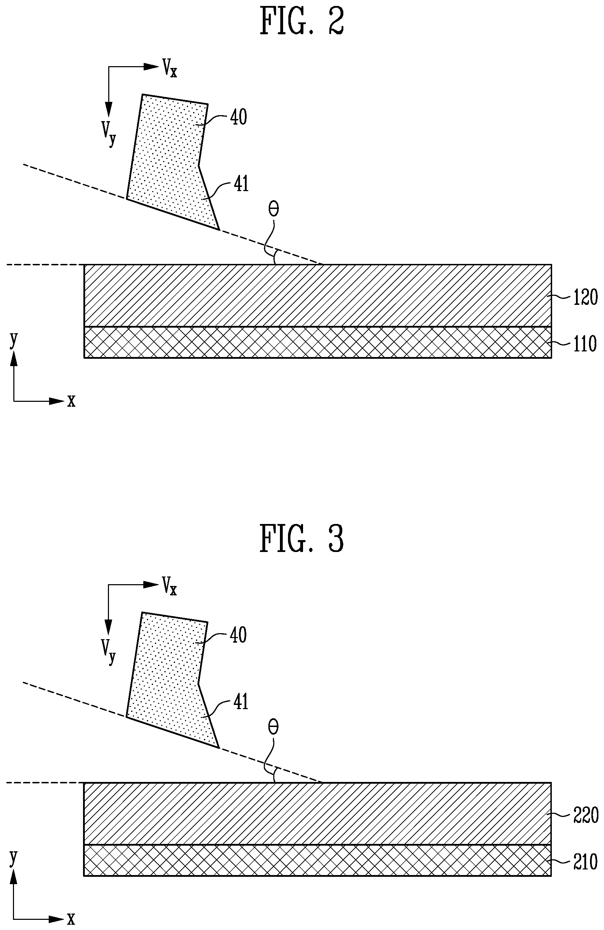

FIGS. 2 to 5 are schematic views illustrating a process of cutting at least a portion of the all-solid-state battery 10 using a cutting device 40 according to an embodiment of the present disclosure. At least a portion of the all-solid-state battery 10 may be cut by the cutting device 40, and binding force of the active material layer of the electrode may be measured through the cutting device 40. The cutting device 40 is not particularly limited as long as the cutting device is a device capable of measuring binding force while performing cutting using a blade 41, and may be, for example, a surface and interfacial cutting analysis system (SAICAS). The SAICAS may include the blade 41. The cutting device 40 illustrated in FIGS. 2 to 5 may correspond to at least a portion adjacent to the blade 41.

Referring to FIGS. 2 to 5, the cutting device 40 may perform oblique cutting of the electrodes 100, 200 of the all-solid-state battery 10. More specifically, referring to FIGS. 2 to 5, the cutting device 40 may perform oblique cutting of the active material layers 120, 220 of the electrode 20. In addition, the cutting device 40 may perform oblique cutting of the current collectors 110 and 210. Further, the cutting device 40 may perform oblique cutting of the electrolyte layer 30.

Referring to FIGS. 2 to 5, the cutting device 40 may be configured to move. The cutting device 40 may move in a horizontal direction (e.g., an x-axis direction). In addition, the cutting device 40 may move in a vertical direction (e.g., a y-axis direction). Here, the vertical direction may refer to a direction in which gravity acts. Further, the horizontal direction may refer to a direction rotated by 90 degrees from the vertical direction. Referring to FIGS. 2 to 5, the y-axis direction may be defined as a vertical direction, and the x-axis direction may be defined as a horizontal direction.

Referring to FIGS. 2 to 5, the cutting device 40 may move simultaneously in the horizontal direction and the vertical direction, and a speed in the horizontal direction (horizontal speed, Vx) and a speed in the vertical direction (vertical speed, Vy) may be independently controlled. By moving simultaneously in the horizontal direction and the vertical direction, the cutting device 40 may perform oblique cutting of at least a portion of the all-solid-state battery 10. That is, by moving simultaneously in the horizontal direction and the vertical direction, the cutting device 40 may actually move in a direction corresponding to a resultant vector, and thus may perform oblique cutting of at least a portion of the all-solid-state battery 10 as described above. On the other hand, in the cutting device 40, the horizontal speed Vₓ and the vertical speed V_{y} during oblique cutting may be predetermined. In addition, the cutting device 40 may maintain preset horizontal and vertical velocities (Vx, Vy) while performing oblique cutting. That is, the cutting device 40 may perform oblique cutting while maintaining the preset horizontal speed Vₓ and vertical speed V_{y}. More specifically, the horizontal speed Vₓ and the vertical speed V_{y} may refer to velocities of the blade 41 of the cutting device 40.

FIG. 2 is a schematic view illustrating a process in which the cutting device 40 cuts at least a portion of the cathode 100. FIG. 3 is a schematic view illustrating a process in which the cutting device 40 cuts at least a portion of the anode 200.

Referring to FIGS. 2 and 3, in the present specification, the oblique cutting may refer to cutting performed while the cutting device 40 moves simultaneously in the horizontal direction and the vertical direction such that the blade 41 forms an angle (cutting inclination angle, θ) with respect to one surface of the active material layers 120 and 220.

Referring to FIGS. 2 and 3, the cutting device 40 may cut the active material layers 120 and 220 such that the blade 41 performs cutting with the cutting inclination angle θ while moving simultaneously in the horizontal direction and the vertical direction from a surface of the active material layers 120 and 220. Referring to FIGS. 2 and 3, the cutting device 40 may be positioned at a location higher than the electrode 20, and the cutting device 40 may simultaneously move in a horizontal direction of a +x direction and a vertical direction of a -y direction. Here, the -y direction may refer to a direction in which gravity acts. In addition, the higher position may refer to a position located further in a +y direction.

Referring to FIGS. 2 and 3, the cutting inclination angle θ may be 2.5 degrees or more, 2.6 degrees or more, 2.7 degrees or more, 2.8 degrees or more, 2.9 degrees or more, or 3 degrees or more, and/or 6 degrees or less, 5.9 degrees or less, 5.8 degrees or less, 5.7 degrees or less, 5.6 degrees or less, or 5.5 degrees or less. In addition, the cutting inclination angle θ may fall within a range formed by appropriately selecting the above-described upper and lower limits. In addition, when the cutting inclination angle θ satisfies the above-described range, it may be more suitable for measuring binding force.

In the all-solid-state battery 10 according to one aspect of the present disclosure, in Equation 1, S_{d2,0.2} and S_{d5,0.5} may each be measured by oblique cutting performed at a cutting inclination angle θ of 2.5 degrees or more, 2.6 degrees or more, 2.7 degrees or more, 2.8 degrees or more, 2.9 degrees or more, or 3 degrees or more, and/or 6 degrees or less, 5.9 degrees or less, 5.8 degrees or less, 5.7 degrees or less, 5.6 degrees or less, or 5.5 degrees or less. More specifically, in Equation 1, S_{d2,0.2} and S_{d5,0.5} may each be a standard deviation of binding force of the active material layers 120, 220, measured three times by oblique cutting performed at a cutting inclination angle θ within the above-described range. The oblique cutting may be performed by the cutting device 40.

In addition, S_{dA2,0.2} and S_{dA5,0.5} of Equation 1A, as well as S_{dB2,0.2} and S_{dB5,0.5} of Equation 1B, may also each be measured by oblique cutting performed at a cutting inclination angle θ within the above-described range. More specifically, S_{dA2,0.2} and S_{dA5,0.5} of Equation 1A may each be a standard deviation of binding force of the cathode active material layer 120, measured three times by oblique cutting performed at a cutting inclination angle θ within the above-described range. S_{dB2,0.2} and S_{dB5,0.5} of Equation 1B may each be a standard deviation of binding force of the anode active material layer 220, measured three times by oblique cutting performed at a cutting inclination angle θ within the above-described range. The oblique cutting may be performed by the cutting device 40.

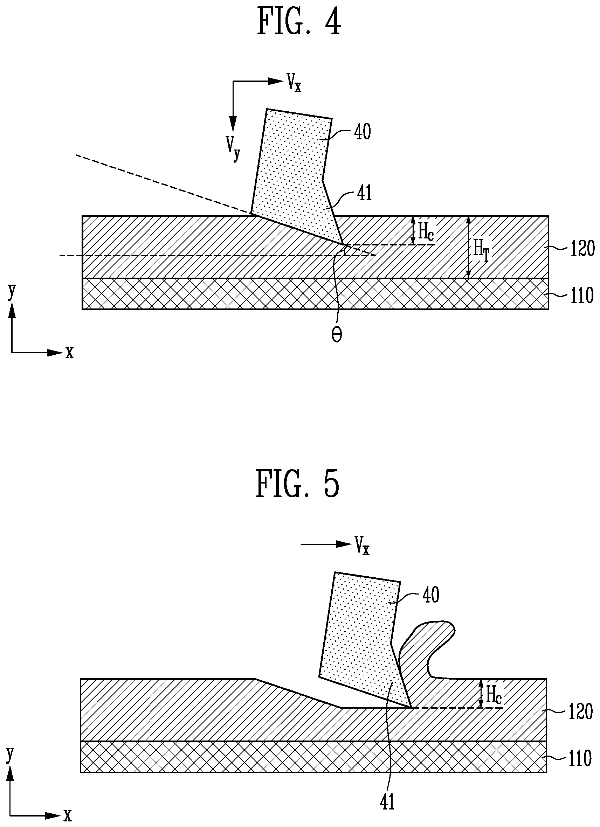

FIGS. 4 and 5 are schematic views illustrating a process in which the cutting device 40 performs cutting with respect to the cathode 100, and although the anode 200 is not separately illustrated, those skilled in the art would readily understand that the anode 200 may be cut in the same manner by reference thereto. Hereinafter, the cathode 100 will be described as a representative example; however, the same may be equally applied to the anode 200.

Referring to FIG. 4, the cutting device 40 may perform oblique cutting of the cathode active material layer 120 such that the blade 41 cuts the cathode active material layer 120 with a cutting inclination angle θ while moving simultaneously in the horizontal direction and the vertical direction from a surface of the cathode active material layer 120, and may continue the oblique cutting until reaching a cutting depth H_{C} suitable for measuring binding force. The cutting depth H_{C} may refer to a vertical straight-line distance from the surface of the cathode active material layer 120 to a distal end of the blade 41. Here, the cutting depth H_{C} may be a predetermined value. That is, referring to FIG. 4, the cutting device 40 may perform oblique cutting of the cathode active material layer 120 such that the distal end of the blade 41 reaches the predetermined cutting depth H_{C}. This may equally apply to the anode active material layer 220 of the anode 200 as described above.

The cutting depth H_{C} suitable for measuring binding force may be located at 20% or more to 80%, or 30% to 70%, of a total thickness H_{T} of the cathode active material layer 120 from the surface thereof. That is, a value obtained by dividing the cutting depth H_{C} by the total thickness H_{T} of the cathode active material layer 120 and multiplying the result by 100 may satisfy the above-described range. This may equally apply to the anode active material layer 220 of the anode 200 as described above. That is, the cutting depth H_{C} suitable for measuring binding force may be located at 20% or more to 80%, or 30% to 70%, of the total thickness H_{T} of the active material layers 120, 220 from a surface thereof.

Referring to FIG. 5, the binding force of the active material layers 120, 220 may be measured while the cutting device 40 moves only in the horizontal direction (i.e., a vertical speed is 0), and the blade 41 positioned at the cutting depth H_{C} performs cutting in the horizontal direction within the active material layers 120 and 220. In addition, the binding force of the active material layers 120 and 220 may be measured by performing oblique cutting until a distal end of the blade 41 reaches the cutting depth H_{C}, and then, at the cutting depth H_{C}, performing cutting within the active material layers 120 and 220 while maintaining the horizontal speed used during the oblique cutting.

Referring to FIG. 5, the binding force of the cathode active material layer 120 may be measured at a cutting depth H_{C} located at 20% or more to 80%, or 30% to 70%, of a total thickness H_{T} of the cathode active material layer 120 from a surface thereof. This may equally apply to the anode active material layer 220 of the anode 200 as described above. That is, the binding force of the active material layers 120 and 220 may be measured at a cutting depth H_{C} located at 20% or more to 80%, or 30% to 70%, of the total thickness H_{T} of the active material layers 120, 220 from a surface thereof.

In the all-solid-state battery 10 according to one aspect of the present disclosure, the binding force P of the active material layers 120 and 220 may be measured according to Equation 2. In addition, the binding force P of the active material layers 120 and 220 may be measured, as described above, by performing oblique cutting until a distal end of the blade 41 reaches the cutting depth H_{C}, and then, at the cutting depth H_{C}, performing cutting within the active material layers 120 and 220 while maintaining the horizontal speed used during the oblique cutting.$P = \frac{{F}_{h}}{w}$

In Equation 2, Fₕ is a horizontal force (N) applied to the blade 41, and w denotes a width (mm) of the blade 41. More specifically, the Fₕ may refer to the horizontal force applied to the blade 41 while cutting an interior of the active material layers 120 and 220 at the cutting depth H_{C} while maintaining the horizontal speed used during the oblique cutting.

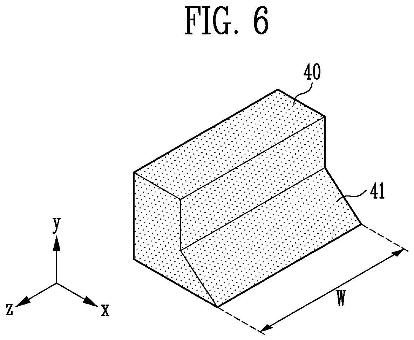

FIG. 6 is a schematic view illustrating at least a portion of the cutting device 40 according to an embodiment of the present disclosure. Referring to FIG. 6, the width (w) of the blade 41 may refer to a straight-line distance between opposite ends of the blade 41 along a z-axis direction. The horizontal force Fₕ applied to the blade 41 may be measured by a force sensor or the like provided in the cutting device 40. A unit of the horizontal force Fₕ may be N (newton).

According to one aspect of the present disclosure, a method of measuring binding force within an electrode of an all-solid-state battery 10 with high reproducibility may be provided. According to one aspect of the present disclosure, based on the method for measuring the binding force, a method capable of more rapidly and accurately measuring a thickness of the all-solid-state battery 10 may be provided.

In the method for measuring the thickness of the all-solid-state battery 10 according to one aspect of the present disclosure, structural characteristics of the all-solid-state battery 10 may refer to all of the foregoing descriptions. The method for measuring the thickness of the all-solid-state battery 10 may include a process of oblique cutting from a surface of the active material layers 120 and 220. The oblique cutting may be performed by the cutting device 40 described above. Details regarding the oblique cutting may refer to all of the foregoing descriptions.

In the method for measuring the thickness of the all-solid-state battery 10 according to one aspect of the present disclosure, in the process of performing the oblique cutting, a horizontal speed Vₓ may be 1 µm/s to 10 µm/s, or 2 µm/s to 8 µm/s. In addition, in the process of performing the oblique cutting, a vertical speed V_{y} may be 0.05 µm/s to 1 µm/s, or 0.1 µm/s to 0.8 µm/s. In the process of performing the oblique cutting, the horizontal speed Vₓ may be greater than the vertical speed V_{y}. In addition, in the process of performing the oblique cutting, a ratio of the horizontal speed Vₓ to the vertical speed V_{y} (Vₓ/V_{y}) may be, for example, 10 or more, 15 or more, or 20 or more, so as to prevent a lower surface of the blade from rubbing against a cutting surface. An upper limit of the ratio (Vₓ/V_{y}) is not particularly limited, but may be, for example, 100 or less, 50 or less, or 30 or less. The ratio (Vₓ/V_{y}) may fall within a range formed by appropriately selecting the above-described upper and lower limits.

In the process of performing the oblique cutting, when the horizontal speed Vₓ and the vertical speed V_{y} during cutting fall within the above-described ranges, binding force within an electrode of the all-solid-state battery may be measured with high reproducibility, and thickness may be measured more rapidly and accurately. In addition, in the process of performing the oblique cutting, when the ratio (Vₓ/V_{y}) during cutting is controlled within the above-described range, binding force within an electrode of the all-solid-state battery may be measured with high reproducibility, and thickness may be measured more rapidly and accurately.

In addition, in the process of performing the oblique cutting, the cutting inclination angle θ may be 2.5 degrees or more, 2.6 degrees or more, 2.7 degrees or more, 2.8 degrees or more, 2.9 degrees or more, or 3 degrees or more, and/or 6 degrees or less, 5.9 degrees or less, 5.8 degrees or less, 5.7 degrees or less, 5.6 degrees or less, or 5.5 degrees or less. Further, the cutting inclination angle θ may fall within a range formed by appropriately selecting the above-described upper and lower limits. When the cutting inclination angle θ satisfies the above-described range, it may be more suitable for measuring binding force and thickness.

In addition, the process of performing the oblique cutting may be performed by the cutting device 40 as described above. The cutting device 40 is not particularly limited as long as the cutting device is a device capable of measuring binding force while performing cutting using a blade 41, and may be, for example, a surface and interfacial cutting analysis system (SAICAS). The SAICAS may include the blade 41.

On the other hand, the cutting device 40 may automatically measure various physical properties, such as a horizontal speed Vₓ, a vertical speed V_{y}, a cutting inclination angle θ, and a force applied to an object in contact with the blade 41. Here, the cutting device 40 may include various instruments, such as a speed meter, an inclination meter, and force sensors (horizontal and vertical), in order to measure the physical properties. In addition, the cutting device 40 may process data obtained through the above-described instruments by operating software, such as a computer program, and the instruments included in the cutting device 40 may be appropriately connected to each other so as to be organically operated by driving the software based on the processed data. The cutting device 40 and at least one of the instruments included in the cutting device 40 may each include a transceiver configured to transmit and receive electronic data generated or converted according to the software, when necessary. In addition, the cutting device 40 and at least one of the instruments included in the cutting device 40 may each further include a controller configured to convert the electronic data, when necessary, so that respective components are operated. In addition, the cutting device 40 and at least one of the instruments included in the cutting device 40 may further include a storage medium capable of storing electronic data generated or converted according to the software, when necessary. A method of transmitting/receiving and converting the electronic data is not particularly limited, and any method available in the art may be applied. The storage medium may be a generally known memory device, and for example, cache memory, buffer memory, a disk, a hard drive, and an SSD may be applied without limitation.

In the method for measuring the thickness of the all-solid-state battery 10 according to one aspect of the present disclosure, the process of performing the oblique cutting may include obtaining load data according to a cutting time. The load data may refer to data associated with a force applied to the blade 41 with respect to an object in contact with the blade 41.

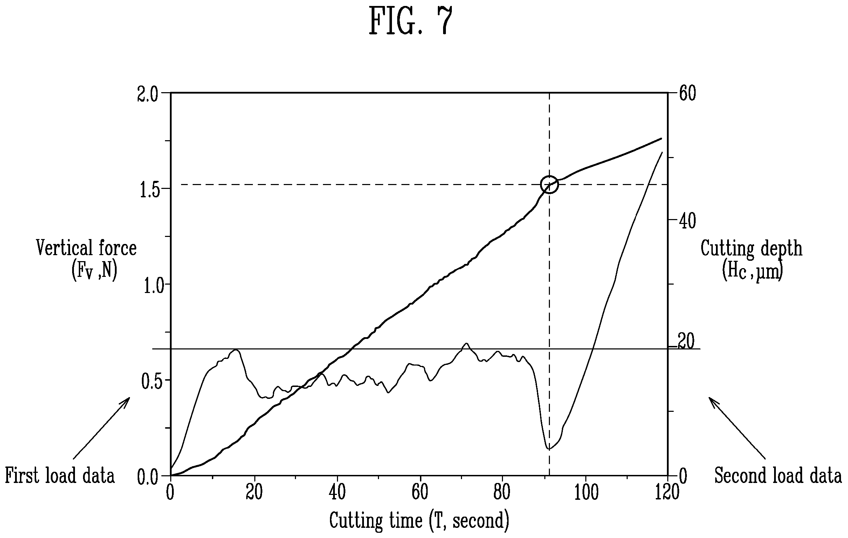

FIG. 7 is a graph illustrating an example of load data according to cutting time according to an embodiment of the present disclosure. Referring to FIG. 7, the load data according to the cutting time may include first load data and second load data. The first load data may refer to a graph in which a first axis represents the cutting time and a second axis, perpendicular to the first axis, represents a measured load value. The second load data may refer to a graph in which the first axis represents the cutting time and a third axis, perpendicular to the first axis, represents a cutting depth H_{C} (see FIG. 7).

On the other hand, the load value may be a vertical force Fᵥ (N) applied to the blade 41. That is, in the first load data, the load value set on the second axis may represent a value of the vertical force Fᵥ applied to the blade 41. A unit of the vertical force Fᵥ may be N (newton).

The method for measuring the thickness of the all-solid-state battery 10 according to one aspect of the present disclosure may include a process of determining a thickness of the active material layers 120 and 220 based on load data according to a cutting time.

In one example, the process of determining the thickness of the active material layers 120 and 220 based on the load data according to the cutting time may include deriving a maximum cutting time C_{T} having a greatest cutting time among points at which a slope is zero in the graph of the first load data. Here, the process of determining the thickness may include obtaining first load derivative data by differentiating the graph of the first load data with respect to the cutting time, which is the first axis.

In addition, in the graph of the first load data according to the example, a maximum load value may be 3 N or less, 2.9 N or less, 2.8 N or less, 2.7 N or less, 2.6 N or less, 2.5 N or less, 2.4 N or less, 2.3 N or less, 2.2 N or less, 2.1 N or less, or 2 N or less. In addition, a lower limit of the maximum load value is not particularly limited, but may be 1 N or more, 1.1 N or more, 1.2 N or more, 1.3 N or more, 1.4 N or more, 1.5 N or more, 1.6 N or more, 1.7 N or more, 1.8 N or more, or 1.9 N or more. The maximum load value may fall within a range formed by appropriately selecting the above-described upper and lower limits. As described above, in the graph of the first load data, the load value may be set on the second axis, and may represent a value of the vertical force Fᵥ applied to the blade 41.

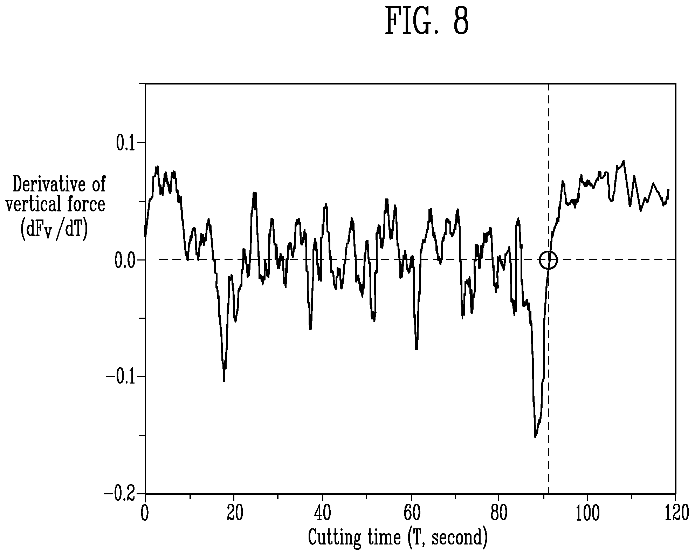

FIG. 8 is a graph illustrating an example of first load derivative data according to an embodiment of the present disclosure. Referring to FIG. 8, the process of deriving the maximum cutting time C_{T}, having a greatest cutting time among points at which a slope is zero in the graph of the first load data, may utilize the first load derivative data obtained in the process of obtaining the first load derivative data.

In addition, the process of determining the thickness of the active material layers 120 and 220 may include deriving a corresponding cutting depth corresponding to the maximum cutting time C_{T} from the graph of the second load data.

In addition, the process of determining the thickness of the active material layers 120 and 220 may include determining the corresponding cutting depth derived as described above as the thickness of the active material layers 120 and 220. That is, among points at which a slope is zero in the graph of the first load data, the maximum cutting time C_{T}, having the greatest cutting time, may be regarded as a time point at which the blade 41 reaches the current collectors 110 and 210 after starting oblique cutting from the surface of the active material layers 120 and 220.

In another example, the process of determining the thickness of the active material layers 120 and 220 based on the load data according to the cutting time may include deriving a point cutting time P_{T}, which is a cutting time at a point where a slope is zero in the graph of the first load data. The process of determining the thickness may include obtaining first load derivative data by differentiating the graph of the first load data with respect to the cutting time, which is the first axis. Referring to FIG. 8, the process of deriving the point cutting time P_{T}, which is the cutting time at a point where the slope is zero in the graph of the first load data, may utilize the first load derivative data obtained in the process of obtaining the first load derivative data.

In addition, in the graph of the first load data according to the example, a maximum load value may be 3.2 N or less, 3.1 N or less, 3 N or less, 2.9 N or less, 2.8 N or less, 2.7 N or less, 2.6 N or less, 2.5 N or less, 2.4 N or less, 2.3 N or less, 2.2 N or less, 2.1 N or less, or 2 N or less. In addition, a lower limit of the maximum load value is not particularly limited, but may be 1 N or more, 1.1 N or more, 1.2 N or more, 1.3 N or more, 1.4 N or more, 1.5 N or more, 1.6 N or more, 1.7 N or more, 1.8 N or more, or 1.9 N or more. The maximum load value may fall within a range formed by appropriately selecting the above-described upper and lower limits. As described above, in the graph of the first load data, the load value may be set on the second axis, and may represent a value of the vertical force Fᵥ applied to the blade 41.

In addition, the process of determining the thickness of the active material layers 120 and 220 may include deriving a corresponding cutting depth corresponding to one of the point cutting times P_{T} within a predetermined range of cutting depths from the graph of the second load data. Further, when a plurality of point cutting times P_{T} exist, a corresponding cutting depth corresponding to a largest point cutting time P_{T} may be derived.

In the process of deriving the corresponding cutting depth, a predetermined range of cutting depths may be 22 µm or more, 23 µm or more, 24 µm or more, or 25 µm or more.

In addition, the process of determining the thickness of the active material layers 120 and 220 may include determining the corresponding cutting depth derived as described above as the thickness of the active material layers 120 and 220.

On the other hand, in another example, the process of deriving the corresponding cutting depth corresponding to one of the point cutting times P_{T} within a predetermined range of cutting depths from the graph of the second load data may include deriving a maximum corresponding cutting depth corresponding to a maximum point cutting time P_{T} among the point cutting times P_{T} within the predetermined range of cutting depths.

In addition, the process of determining the thickness of the active material layers 120 and 220 may include determining the corresponding cutting depth derived as described above as the thickness of the active material layers 120 and 220.

The foregoing description is merely illustrative of the principles of the present disclosure, and various modifications and additional configurations may be made without departing from the scope of the present disclosure.

Hereinafter, embodiments of the present invention will be further described with reference to specific experimental examples. The examples and comparative examples included in the experimental examples are provided only for illustrating the present disclosure and are not intended to limit the scope of the appended claims. It will be apparent to those skilled in the art that various changes and modifications may be made to the embodiments without departing from the scope and spirit of the present disclosure. It is also to be understood that such variations and modifications fall within the scope of the appended claims.

### Preparation Example 1

A cathode 100 to be used in an all-solid-state battery 10 was prepared as follows. As the cathode current collector 110 of the cathode 100, an aluminum foil having a thickness of about 12 µm was used. A cathode active material slurry composition for forming cathode active material layers 120 on both surfaces of the cathode current collector 110 was applied onto the aluminum foil at an appropriate loading amount, and the aluminum foil coated with the cathode active material slurry composition was dried at 80 °C and then roll-pressed under a pressure of about 300 MPa to prepare the cathode 100. A thickness of the prepared cathode active material layer 120 was about 46 µm. A detailed method for measuring the thickness of the cathode active material layer 120 will be described later.

The cathode active material slurry composition was prepared by mixing a cathode active material (A), a cathode binder (B), an electrolyte (C), and a conductive material (D) in a weight ratio of 80:1:17.5:1.5 (A:B:C:D), and additionally adding a sufficient amount of a solvent. The cathode active material (A) was LiNi₀.₈Co₀.₁Mn₀.₁O₂, which is a lithium nickel-cobalt-manganese (NCM) oxide, and the cathode binder (B) was butadiene rubber (BR). In addition, the electrolyte (C) was Li₆PS₅Cl, and the conductive material (D) was carbon black. In addition, the solvent was an ester-based organic solvent.

### Preparation Examples 2 and 3

Cathodes 100 were prepared in the same manner as in Preparation Example 1, except that the cathode active material slurry composition, the loading amount, and the roll-pressing pressure were adjusted.

### Comparative Preparation Example 1

A cathode 100 was prepared in the same manner as in Preparation Example 1, except that the roll-pressing was performed under a pressure of about 100 MPa.

With respect to the cathodes 100 prepared in Preparation Examples 1 to 3 and Comparative Preparation Example 1, binding force (P, see Equation 2) of the cathode active material layer 120 of each cathode 100 was measured three times using a surface and interfacial cutting analysis system (SAICAS), and standard deviations thereof were derived. A cutting inclination angle θ was about 5.7 degrees, and a cutting depth H_{C} was about 20 µm (depth measured by oblique cutting from the surface of the active material layer 120 and 220. The derived standard deviations and ratios of the standard deviations are summarized in Table 1 below. In Table 1, SdR1 is defined according to Equation 1.

**[Table 1]**

| Classification | Electrode | Speed of Blade | Standard Deviation | S_{dR1} |
|---|---|---|---|---|
| Preparation Example 1 | Cathode | Horizontal speed (Vₓ): 2 µm/s | S_{d2,0.2} =0.05769 | 3.325 |
| | | Vertical speed (V_{y}): 0.2 µm/s | | |
| | | Horizontal speed (Vₓ): 5 µm/s | S_{d5,0.5} =0.01735 | |
| | | Vertical speed (V_{y}): 0.5 µm/s | | |
| Preparation Example 2 | Cathode | Horizontal speed (Vₓ): 2 µm/s | S_{d2,0.2} =0.01942 | 10.418 |
| | | Vertical speed (V_{y}): 0.2 µm/s | | |
| | | Horizontal speed (Vₓ): 5 µm/s | S_{d5,0.5} =0.01864 | |
| | | Vertical speed (V_{y}): 0.5 µm/s | | |
| Preparation Example 3 | Cathode | Horizontal speed (Vₓ): 2 µm/s | S_{d2,0.2} =0.06127 | 2.681 |
| | | Vertical speed (V_{y}): 0.2 µm/s | | |
| | | Horizontal speed (Vₓ): 5 µm/s | S_{d5,0.5} =0.02285 | |
| | | Vertical speed (V_{y}): 0.5 µm/s | | |
| Comparative Preparation Example 1 | Cathode | Horizontal speed (Vₓ): 2 µm/s | S_{d2,0.2} =0.004163 | 0.1567 |
| | | Vertical speed (V_{y}): 0.2 µm/s | | |
| | | Horizontal speed (Vₓ): 5 µm/s | S_{d5,0.5} =0.02658 | |
| | | Vertical speed (V_{y}): 0.5 µm/s | | |

In Table 1, S_{dR1} of the cathode has the same meaning as S_{dR1A} and S_{dR1C} of Equations 1A and 1C.

### Preparation Example 4

An anode 200 to be used in an all-solid-state battery 10 was prepared as follows. As the anode current collector 210 of the anode 200, a carbon-coated copper foil having a thickness of about 8 µm was used. An anode active material slurry composition for forming anode active material layers 220 on both surfaces of the anode current collector 210 was applied onto the carbon-coated copper foil at an appropriate loading amount, and the carbon-coated copper foil coated with the anode active material slurry composition was dried at 80 °C and then roll-pressed under a pressure of about 300 MPa to prepare the anode 200. A thickness of the prepared anode active material layer 220 was about 45 µm.

The anode active material slurry composition was prepared by mixing an anode active material (A), an anode binder (B), an electrolyte (C), and a conductive material (D) in a weight ratio of 77:3:19:1 (A:B:C:D), and additionally adding a sufficient amount of a solvent. The anode active material (A) was natural graphite (A1). The anode binder (B) was butadiene rubber (BR), and the electrolyte (C) was Li₆PS₅Cl. The conductive material (D) was carbon black. In addition, the solvent was an ester-based organic solvent.

### Preparation Examples 5 and 6

Anodes 200 were prepared in the same manner as in Preparation Example 4, except that the anode active material slurry composition, the loading amount, and the roll-pressing pressure were adjusted.

### Comparative Preparation Example 2

An anode 200 was prepared in the same manner as in Preparation Example 4, except that the roll-pressing was performed under a pressure of about 100 MPa.

With respect to the anodes 200 prepared in Preparation Examples 4 to 6 and Comparative Preparation Example 2, binding force P (see Equation 2) of the anode active material layer 220 of each anode 200 was measured three times using a surface and interfacial cutting analysis system (SAICAS), and standard deviations thereof were derived. A cutting inclination angle θ was about 5.7 degrees, and a cutting depth H_{C} was about 20 µm (depth measured by oblique cutting from the surface of the active material layers 120 and 220. The derived standard deviations and ratios of the standard deviations are summarized in Table 2 below. In Table 2, S_{dR1} is defined according to Equation 1.

**[Table 2]**

| Classification | Electrode | Speed of Blade | Standard Deviation | S_{dR1} |
|---|---|---|---|---|
| Preparation Example 4 | Anode | Horizontal speed (Vₓ): 2 µm/s | S_{d2,0.2} =0.008021 | 2.119 |
| | | Vertical speed (V_{y}): 0.2 µm/s | | |
| | | Horizontal speed (Vₓ): 5 µm/s | S_{d5,0.5} =0.003786 | |
| | | Vertical speed (V_{y}): 0.5 µm/s | | |
| Preparation Example 5 | Anode | Horizontal speed (Vₓ): 2 µm/s | S_{d2,0.2} =0.042813 | 10.399 |
| | | Vertical speed (V_{y}): 0.2 µm/s | | |
| | | Horizontal speed (Vₓ): 5 µm/s | S_{d5,0.5} =0.004117 | |
| | | Vertical speed (V_{y}): 0.5 µm/s | | |
| Preparation Example 6 | Anode | Horizontal speed (Vₓ): 2 µm/s | S_{d2,0.2} =0.03986 | 1.882 |
| | | Vertical speed (V_{y}): 0.2 µm/s | | |
| | | Horizontal speed (Vₓ): 5 µm/s | S_{d5,0.5} =0.02118 | |
| | | Vertical speed (V_{y}): 0.5 µm/s | | |
| Comparative Preparation Example 2 | Anode | Horizontal speed (Vₓ): 2 µm/s | S_{d2,0.2} =0.003464 | 0.7330 |
| | | Vertical speed (V_{y}): 0.2 µm/s | | |
| | | Horizontal speed (Vₓ): 5 µm/s | S_{d5,0.5} =0.004726 | |
| | | Vertical speed (V_{y}): 0.5 µm/s | | |

**In** Table 2, S_{dR1} of the anode has the same meaning as S_{dR1B} of Equations 1B and 1C.

### Example 1.

In order to evaluate the performance of the cathode prepared in Preparation Example 1, an all-solid-state battery using lithiated indium as a counter electrode was prepared. As a solid electrolyte layer of the all-solid-state battery, an argyrodite-type sulfide-based solid electrolyte was used. Specifically, the argyrodite-type sulfide-based solid electrolyte was introduced into a pressed cell and compressed to form the solid electrolyte layer, and a lithiated indium counter electrode was disposed on one surface of the solid electrolyte layer and the cathode perforated with 10 pi was disposed on the other surface, followed by press-molding under a pressure of 300 to 500 MPa to prepare the all-solid-state battery. A thickness of the prepared electrolyte layer was about 700 µm.

An electrochemical evaluation was performed on the battery of Example 1 obtained as described above.

### Example 2.

An all-solid-state battery was prepared in the same manner as in Example 1, except that the cathode prepared in Preparation Example 2 was used, and an electrochemical evaluation was performed.

### Example 3.

An all-solid-state battery was prepared in the same manner as in Example 1, except that the cathode prepared in Preparation Example 3 was used, and an electrochemical evaluation was performed.

### Comparative Example 1.

An all-solid-state battery was prepared in the same manner as in Example 1, except that the cathode prepared in Comparative Preparation Example 1 was used.

### Example 4.

An all-solid-state battery was prepared in the same manner as in Example 1, except that the anode of Preparation Example 4 was used as an anode and lithiated indium, which is the same as in Example 1, was used as a counter electrode.

### Example 5.

An all-solid-state battery was prepared in the same manner as in Example 4, except that the anode prepared in Preparation Example 5 was used, and an electrochemical evaluation was performed.

### Example 6.

An all-solid-state battery was prepared in the same manner as in Example 4, except that the anode prepared in Preparation Example 6 was used, and an electrochemical evaluation was performed.

### Comparative Example 2.

An all-solid-state battery was prepared in the same manner as in Embodiment 4, except that the anode prepared in Comparative Preparation Example 2 was used.

### Experimental Example 1: Electrochemical Evaluation 1

A discharge capacity at a first cycle of the all-solid-state batteries prepared in the above Examples and Comparative Examples was measured using a charge/discharge apparatus (manufacturer: WONA TECH Co., Ltd., model name: WBCS3000). Specifically, the all-solid-state batteries prepared in Examples 1 to 6 and Comparative Examples 1 and 2 were charged at about 30 °C at a rate of 0.1C under a constant current mode until a voltage reached 3.65 V, and subsequently charged under a constant voltage mode by maintaining 3.65 V and applying a cutoff at a rate of 0.01C. Thereafter, constant current discharge was performed at a rate of 0.1C until a voltage reached 1.88 V. At this time, a discharge capacity at a first cycle (n = 1) (initial discharge capacity, C₀.₁) was measured, and the results are summarized in Table 3 below.

With respect to the all-solid-state batteries 10 prepared in Examples 1 to 6 and Comparative Examples 1 and 2, constant current charging was performed at about 30 °C at a rate of 1C until a voltage reached 3.65 V, and subsequently, constant voltage charging was performed by maintaining 3.65 V and applying a cutoff at a rate of 0.1C. Thereafter, constant current discharge was performed at a rate of 1C until a voltage reached 1.88 V. At this time, a discharge capacity at the first cycle (n = 1) (C₁) was measured, and a rate capability retention (unit: %) obtained by dividing the measured discharge capacity (C₁) by the discharge capacity (C₀.₁) and multiplying by 100 was summarized in Table 3 below.

**[Table 3]**

| Classification | Initial Discharge Capacity (mAh/g) | Rate Capability Retention (%) |
|---|---|---|
| Embodiment 1 | 195 | 77 |
| Embodiment 1 | 191 | 75 |
| Embodiment 1 | 185 | 72 |
| Comparative Example 1 | 172 | 68 |

Referring to Table 3, it can be seen that both the initial discharge capacity and the rate capability retention of the all-solid-state batteries to which the cathodes according to the Examples of the present disclosure are applied are superior to those of the Comparative Example. Specifically, it can be confirmed that Examples 1 to 3, in which the S_{dR1} value according to Equation 1 for the cathode of the all-solid-state battery according to the present disclosure is 1 or more, exhibit higher initial discharge capacity than Comparative Example 1, and also exhibit superior rate capability retention. Through this, it can be confirmed that the all-solid-state battery according to the present disclosure exhibits excellent electrochemical performance in a range where the S_{dR1} value according to Equation 1 is 1 or more.

### Experimental Example 2: Electrochemical Evaluation 2

An electrochemical evaluation was performed on the all-solid-state batteries prepared in Examples 4 to 6 and Comparative Example 2 using a charge/discharge apparatus (manufacturer: WONA TECH Co., Ltd., model name: WBCS3000). The all-solid-state batteries prepared in Examples 7 to 12 and Comparative Example 3 were charged at about 30 °C at a rate of 1C under a constant current mode until a voltage reached -0.615 V, and subsequently charged under a constant voltage mode by maintaining -0.615 V and applying a cutoff at a rate of 0.1C. Thereafter, constant current discharge was performed at a rate of 1C until a voltage reached 1.38 V. At this time, a discharge capacity at a first cycle (n = 1) (initial discharge capacity, C₀.₁) was measured, and the results are summarized in Table 4 below.

In addition, the all-solid-state batteries prepared in Examples 4 to 6 and Comparative Example 2 were charged at about 30 °C at a rate of 1C under a constant current mode until a voltage reached -0.615 V, and subsequently charged under a constant voltage mode by maintaining -0.615 V and applying a cutoff at a rate of 0.1C. Thereafter, constant current discharge was performed at a rate of 1C until a voltage reached 1.38 V. At this time, a discharge capacity at the first cycle (n = 1) (C₁) was measured, and a rate capability retention (unit: %) obtained by dividing the measured discharge capacity (C₁) by the discharge capacity (C₀.₁) and multiplying by 100 is summarized in Table 4 below.

**[Table 4]**

| Classification | Initial Discharge Capacity (mAh/g) | Rate Capability Retention (%) |
|---|---|---|
| Embodiment 4 | 340 | 86 |
| Embodiment 5 | 331 | 83 |
| Embodiment 6 | 325 | 81 |
| Comparative Example 2 | 285 | 78 |

Referring to Table 4, it can be seen that both the initial discharge capacity and the rate capability retention of the all-solid-state batteries to which the anodes according to the Examples of the present disclosure are applied are superior to those of the Comparative Example. Specifically, referring to Examples 4 to 6 and Comparative Example 2, it can be confirmed that the all-solid-state batteries of Examples 4 to 6, in which the S_{dR1} value according to Equation 1 for the anode of the all-solid-state battery according to the present disclosure is 1 or more, exhibit higher initial discharge capacity than that of Comparative Example 2, in which the S_{dR1} value is less than 1, and also exhibit superior rate capability retention. Through this, it can be confirmed that the all-solid-state battery according to the present disclosure exhibits excellent electrochemical performance in a range where the S_{dR1} value according to Equation 1 is 1 or more.

### Example 7.

An all-solid-state battery was prepared using the cathode of Preparation Example 1 and the anode of Preparation Example 4. As a solid electrolyte layer of the all-solid-state battery, an argyrodite-type sulfide-based solid electrolyte was used. Specifically, an argyrodite-type sulfide-based solid electrolyte was introduced into a pressed cell and compressed to form the solid electrolyte layer, and the cathode of Preparation Example 1 perforated at 10 holes per inch (10 pi) was disposed on one surface of the solid electrolyte layer and the anode of Preparation Example 4 perforated at 10 holes per inch (10 pi) was disposed on the other surface, followed by press-molding under a pressure of 300 to 500 MPa to prepare the all-solid-state battery. A thickness of the prepared electrolyte layer was about 700 µm. S_{dR1A} according to Equation 1A for the cathode of Preparation Example 1, S_{dR1B} according to Equation 1B for the anode of Preparation Example 4, and RAB according to Equation 1C are summarized in Table 5 below.

**[Table 5]**

| Classification | Cathode | Anode | S_{dR1A} | S_{dR1B} | R_{AB} = S_{dR1A} / S_{dR1B} |
|---|---|---|---|---|---|
| Embodiment 7 | Preparation Embodiment 1 | Preparation Embodiment 4 | 3.325 | 2.119 | 1.569 |

### Thickness Measurement Example 1

With respect to the cathode 100 prepared in Preparation Example 1, a thickness of the cathode active material layer 120 of the cathode 100 was measured using a surface and interfacial cutting analysis system (SAICAS).

The SAICAS, which is a cutting device 40, was positioned at a location higher than the cathode active material layer 120. Thereafter, a blade 41 included in the SAICAS was positioned to be in contact with a surface of the cathode active material layer 120. Subsequently, the cathode active material layer 120 was subjected to oblique cutting using the blade 41 under conditions in which a cutting inclination angle θ was about 5.7 degrees, a horizontal speed Vₓ of the blade 41 was about 5 µm/s, and a vertical speed V_{y} was about 0.5 µm/s. During this process, load data including first load data and second load data as shown in FIG. 7 were obtained. Further, the obtained first load data were differentiated with respect to cutting time to obtain first differentiated load data as shown in FIG. 8.

Referring to FIG. 8, among points at which a slope of the graph of the first load data is zero, a maximum cutting time C_{T} having the largest cutting time was about 91 seconds. Here, in the graph of the second load data, a cutting depth corresponding to 91 seconds was found to be about 46 µm.

Referring to FIG. 8, a point cutting time P_{T}, which is a cutting time at a point where a slope of the graph of the first load data is zero, can be derived. The point cutting time P_{T} at a predetermined cutting depth of about 22 µm or more was found to be about 91 seconds. Here, in the graph of the second load data, a cutting depth corresponding to 91 seconds was found to be about 46 µm.

Further, the measurement using the SAICAS was repeated three times to measure the thickness of the active material layer 120 of the cathode 100, and the results are summarized in Table 3 below.

### Thickness Measurement Example 2

With respect to the cathode 100 prepared in Preparation Example 1, a thickness of the active material layer 120 of the cathode 100 was measured in the same manner as in Thickness Measurement Example 1, except that a horizontal speed Vₓ of the blade 41 was about 2 µm/s and a vertical speed V_{y} was about 0.2 µm/s.

Further, the measurement using the SAICAS was repeated three times to measure the thickness of the active material layer 120 of the cathode 100, and the results are summarized in Table 3 below.

### Thickness Measurement Reference Example 1

With respect to the cathode 100 prepared in Preparation Example 1, a thickness of the active material layer 120 of the cathode 100 was measured using a micrometer, and the results are summarized in Table 3 below.

### Thickness Measurement Reference Example 2

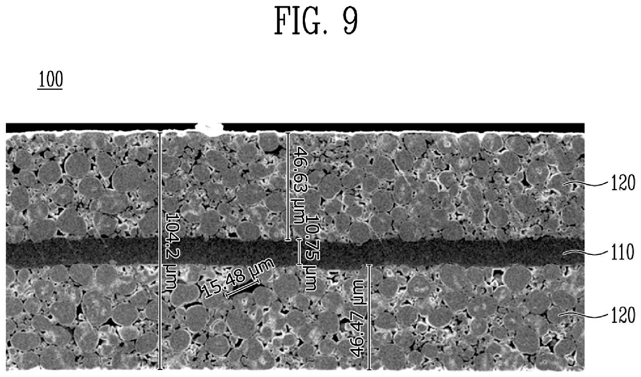

With respect to the cathode 100 prepared in Preparation Example 1, a cross-sectional sample of an electrode was prepared using an ion milling apparatus, and a thickness of the active material layer 120 of the cathode 100 was measured using a scanning electron microscope (SEM), and the results are summarized in FIG. 9 and Table 6 below. FIG. 9 is a scanning electron microscope image of the cathode 100.

**[Table 6]**

| Classification | Measured Thickness (µm) | | Average Thickness (µm) |
|---|---|---|---|
| Thickness Measurement Example 1 | 1st | 46.8 | 46.3 |
| | 2nd | 46.4 | |
| | 3rd | 45.7 | |
| Thickness Measurement Example 2 | 1st | 46.0 | 45.9 |
| | 2nd | 45.5 | |
| | 3rd | 46.3 | |
| Thickness Measurement Reference Example 1 | 1st | 45.4 | 45.5 |
| | 2nd | 45.6 | |
| Thickness Measurement Reference Example 2 | 1st | 46.6 | 46.6 |
| | 2nd | 46.5 | |

Referring to Table 6, it can be seen that a difference between the thickness of the cathode active material layer 120 measured using the cutting device 40, i.e., SAICAS, and the thickness measured using a micrometer or a scanning electron microscope image is not significant. Accordingly, it can be confirmed that the thickness measurement method according to one aspect of the present disclosure enables rapid and accurate measurement.

Hereinafter, various aspects of the present disclosure are as follows.

Aspect 1: An all-solid-state battery according to the present disclosure includes at least one electrode and an electrolyte layer, wherein the electrode includes a current collector and an active material layer, and S_{dR1} according to Equation 1 may be 1 or more.${S}_{dR 1} = {S}_{d 2 , 0.2} / {S}_{d 5 , 0.5}$

In Equation 1, S_{d2,0.2} is a standard deviation of binding force of the active material layer measured three times by oblique cutting from a surface of the active material layer at a horizontal speed of 2 µm/s and a vertical speed of 0.2 µm/s, and S_{d5,0.5} is a standard deviation of binding force of the active material layer measured three times by oblique cutting from the surface of the active material layer at a horizontal speed of 5 µm/s and a vertical speed of 0.5 µm/s.

Aspect 2: In Aspect 1, S_{dR1} according to Equation 1 may be 10 or less.

Aspect 3: In Aspect 1 or 2, the active material layer is a cathode active material layer, and S_{d5,0.5} according to Equation 1 may be 0.02 or less.

Aspect 4: In Aspect 1 or 2, the active material layer is an anode active material layer, and S_{d5,0.5} according to Equation 1 may be 0.02 or less.

Aspect 5: In any one of Aspects 1 to 4, in Equation 1, S_{d2,0.2} and S_{d5,0.5} may each independently be a standard deviation of binding force of the active material layer measured three times by oblique cutting at an inclination angle of 2.5 degrees to 6 degrees.

Aspect 6: In any one of Aspects 1 to 5, the binding force of the active material layer may be measured at a cutting depth corresponding to 20% to 80% of a total thickness from a surface of the active material layer.

Aspect 7: In any one of Aspects 1 to 6, the binding force of the active material layer may be measured using a surface and interfacial cutting analysis system (SAICAS) including a blade.

Aspect 8: In Aspect 7, the binding force P of the active material layer may be measured according to Equation 2 below.$P = \frac{{F}_{h}}{w}$

In Equation 2, Fh is a horizontal force (N) applied to the blade, and w denotes a width (mm) of the blade.

Aspect 9: In any one of Aspects 1 to 8, a thickness of the active material layer may be in a range of 22 µm to 130 µm.

Aspect 10: In any one of Aspects 1 to 9, the active material layer and the electrolyte layer may be in close contact with each other by being pressed under a pressure of 200 MPa or more.

Aspect 11: In any one of Aspects 1 to 10, the active material layer may include an active material and a binder.

Aspect 12: In any one of Aspects 1 to 11, the electrolyte layer may include at least one selected from the group consisting of a polymer-based electrolyte, an oxide-based electrolyte, and a sulfide-based electrolyte.

Aspect 13: An aspect of the present disclosure relates to a method for measuring a thickness of an all-solid-state battery. Here, the all-solid-state battery includes at least one electrode and an electrolyte layer, the electrode includes a current collector and an active material layer, and the method includes a process of oblique cutting from a surface of the active material layer. In addition, the oblique cutting is performed at a horizontal speed of 1 µm/s to 10 µm/s and a vertical speed of 0.05 µm/s to 1 µm/s.

Aspect 14: In Aspect 13, the oblique cutting may be performed at an inclination angle of 2.5 degrees to 6 degrees.

Aspect 15: In Aspect 13 or 14, the oblique cutting may be performed using a surface and interfacial cutting analysis system (SAICAS) including a blade.

Aspect 16: In any one of Aspects 13 to 15, the oblique cutting may include obtaining load data according to cutting time, and may further include measuring a thickness of the active material layer based on the load data according to the cutting time.

Aspect 17: In Aspect 16, the load data according to the cutting time may include first load data and second load data, wherein the first load data is a graph in which a first axis represents the cutting time and a second axis perpendicular to the first axis represents a load value, and the second load data is a graph in which the first axis represents the cutting time and a third axis perpendicular to the first axis represents a cutting depth, and the load value may be a vertical force applied to the blade.

Aspect 18: In Aspect 17, the process of measuring the thickness of the active material layer may include deriving a maximum cutting time, which is the largest cutting time among points at which a slope of the graph of the first load data is zero, and deriving a corresponding cutting depth corresponding to the maximum cutting time from the graph of the second load data, and determining the corresponding cutting depth as the thickness of the active material layer.

Aspect 19: In Aspect 18, a maximum load value in the graph of the first load data may be 3 N or less.

Aspect 20: In Aspect 17, the process of measuring the thickness of the active material layer may include deriving a point cutting time, which is a cutting time at a point where a slope of the graph of the first load data is zero, and deriving a corresponding cutting depth corresponding to one of the point cutting times within a predetermined cutting depth range from the graph of the second load data, and determining the corresponding cutting depth as the thickness of the active material layer.

Aspect 21: In Aspect 20, the predetermined cutting depth range may be 22 µm or more.

Aspect 22: In Aspect 21, the process of deriving the corresponding cutting depth may include deriving a maximum corresponding cutting depth corresponding to a maximum point cutting time among the point cutting times within the predetermined cutting depth range, and determining the maximum corresponding cutting depth as the thickness of the active material layer.

### [Description of the Symbols]

10: All-solid-state battery
30: Electrolyte layer
40: Cutting device
41: Blade
100: Cathode
110: Cathode current collector
120: Cathode active material layer
200: Anode
210: Anode current collector
220: Anode active material layer

## Claims

1. An all-solid-state battery comprising:
at least one electrode; and
an electrolyte layer,
wherein the electrode comprises a current collector and an active material layer, and S_{dR1} according to Equation 1 below is 1 or more: ${S}_{dR 1} = {S}_{d 2 , 0.2} / {S}_{d 5 , 0.5}$
wherein, in Equation 1, S_{d2,0.2} is a standard deviation of a binding force of the active material layer measured three times by performing oblique cutting from a surface of the active material layer at a horizontal speed of 2 µm/s and a vertical speed of 0.2 µm/s, and S_{d5,0.5} is a standard deviation of a binding force of the active material layer measured three times by performing oblique cutting from the surface of the active material layer at a horizontal speed of 5 µm/s and a vertical speed of 0.5 µm/s.

2. The all-solid-state battery of claim 1, wherein the S_{dR1} according to Equation 1 is 10 or less.

3. The all-solid-state battery of claim 1, wherein the active material layer is a cathode active material layer, and
S_{d5,0.5} according to Equation 1 is 0.02 or less.

4. The all-solid-state battery of claim 1, wherein the active material layer is an anode active material layer, and
S_{d5,0.5} according to Equation 1 is 0.02 or less.

5. The all-solid-state battery of claim 1, wherein, in Equation 1, S_{d2,0.2} and S_{d5,0.5} are each independently a standard deviation of a binding force of the active material layer measured three times by performing oblique cutting at an angle of 2.5 degrees to 6 degrees.

6. The all-solid-state battery of claim 1, wherein a binding force of the active material layer is measured at a cutting depth corresponding to 20% to 80% of a total thickness from a surface of the active material layer.

7. The all-solid-state battery of claim 1, wherein a binding force of the active material layer is measured using a surface and interfacial cutting analysis system (SAICAS) comprising a blade.

8. The all-solid-state battery of claim 7, wherein a binding force (P) of the active material layer is measured according to Equation 2 below: $P = \frac{{F}_{h}}{w}$ wherein, in Equation 2, Fₕ is a horizontal force (N) applied to the blade, and w is a width (mm) of the blade.

9. The all-solid-state battery of claim 1, wherein a thickness of the active material layer is in a range of 22 µm to 130 µm.

10. The all-solid-state battery of claim 1, wherein the active material layer and the electrolyte layer are pressed under a pressure of 200 MPa or more and brought into close contact with each other.

11. The all-solid-state battery of claim 1, wherein the active material layer comprises an active material and a binder.

12. The all-solid-state battery of claim 1, wherein the electrolyte layer comprises at least one selected from the group consisting of a polymer-based electrolyte, an oxide-based electrolyte, and a sulfide-based electrolyte.

13. A method for measuring a thickness of an all-solid-state battery, wherein the all-solid-state battery comprises at least one electrode and an electrolyte layer, and the electrode comprises a current collector and an active material layer, the method comprising oblique cutting from a surface of the active material layer,
wherein the oblique cutting is performed at a horizontal speed of 1 µm/s to 10 µm/s and a vertical speed of 0.05 µm/s to 1 µm/s.

14. The method of claim 13, wherein the oblique cutting is performed at a cutting inclination angle of 2.5 degrees to 6 degrees.

15. The method of claim 13, wherein the oblique cutting is performed using a surface and interfacial cutting analysis system (SAICAS) comprising a blade.

16. The method of claim 15, wherein the oblique cutting comprises obtaining load data as a function of cutting time, and
the method further comprises measuring a thickness of the active material layer based on the load data as a function of cutting time.

17. The method of claim 16, wherein the load data as a function of cutting time comprises first load data and second load data,
the first load data is a graph having a first axis representing the cutting time and a second axis, perpendicular to the first axis, representing a load value,
the second load data is a graph having a first axis representing the cutting time and a third axis, perpendicular to the first axis, representing a cutting depth, and
the load value is a vertical force applied to the blade.

18. The method of claim 17, wherein the measuring of the thickness of the active material layer comprises:
deriving a maximum cutting time corresponding to a largest cutting time, among points at which a slope is 0 in a graph of the first load data;
deriving a corresponding cutting depth corresponding to the maximum cutting time from a graph of the second load data; and
determining the corresponding cutting depth as the thickness of the active material layer.

19. The method of claim 18, wherein a maximum load value in the graph of the first load data is 3 N or less.

20. The method of claim 17, wherein the measuring of the thickness of the active material layer comprises:
deriving a point cutting time corresponding to a cutting time at a point at which a slope is 0 in a graph of the first load data;
deriving a corresponding cutting depth corresponding to one of the point cutting times within a predetermined range of cutting depth from a graph of the second load data; and
determining the corresponding cutting depth as the thickness of the active material layer.

21. The method of claim 20, wherein the predetermined range of cutting depth is 22 µm or more.

22. The method of claim 20, wherein the deriving of the corresponding cutting depth comprises deriving a maximum corresponding cutting depth corresponding to a maximum point cutting time among the point cutting times within a predetermined range of cutting depth, and
the maximum corresponding cutting depth is determined as the thickness of the active material layer.
